# EUROPÄISCHE PATENTANMELDUNG

(11) **EP 3 944 941 A1**
(43) Veröffentlichungstag der Anmeldung: **02.02.2022**
(21) Anmeldenummer: 20188059.8
(22) Anmeldetag: 28.07.2020
(51) Int. Cl.: B27N 1/00, B27N 1/02, B27N 3/18, B27N 3/00, B01F 7/02, B01F 7/08, B29C 48/00, B01J 20/26, B01J 37/00, B27N 3/02, B27N 3/04, B27N 3/28, B29C 43/02, B29C 43/52, C08L 97/02, B29B 7/48, B01J 8/02, B01J 13/18

(54) **HERSTELLUNG VON AMINOPLASTHARZEN MITTELS EXTRUDER**

(71) Anmelder: Fritz Egger GmbH & Co. OG, 6380 St. Johann in Tirol (AT)
(72) Erfinder: GEYER, Andreas, 3500 Krems an der Donau (AT)
(74) Vertreter: Cohausz & Florack

(57) **Zusammenfassung**

Die Erfindung betrifft ein Verfahren zur Herstellung eines aminoplastisch gebundenen Holzwerkstoffs, umfassend a. das Bereitstellen einer Mischung umfassend ein Harnstoff-Formaldehyd-Kondensat, b. die reaktive Extrusion der Mischung umfassend ein Harnstoff-Formaldehyd-Kondensat in einem Extruder, c. die Beleimung von lignocellulohaltigem Material durch Aufbringen einer Leimflotte enthaltend oder bestehend aus dem extrudierten Leim auf das lignocellulosehaltige Material, wobei das Aufbringen mittels einer Leimapplikationseinrichtung erfolgt, und dem Verpressen des beleimten lignocellulosehaltigen Materials. Außerdem betrifft die Erfindung mit dem erfindungsgemäßen Verfahren hergestellte Holzwerkstoffe und eine Vorrichtung geeignet zur Durchführung des erfindungsgemäßen Verfahrens. Ferner betrifft die Erfindung die Verwendung einer reaktiven Extrusion für aminoplastische Bindemittel zur Herstellung formaldehydemissionsarmer Holzwerkstoffe.

## Beschreibung

### TECHNISCHER BEREICH DER ERFINDUNG

Die Erfindung betrifft ein Verfahren zur Herstellung aminoplastisch gebundener Holzwerkstoffe, in welchem das aminoplastische Bindemittel einer reaktiven Extrusion unterzogen wird sowie eine dazu geeignete Vorrichtung und damit hergestellte Holzwerkstoffe. Ferner betrifft die Erfindung die Verwendung einer reaktiven Extrusion für aminoplastische Bindemittel zur Herstellung formaldehydemissionsarmer Holzwerkstoffe.

### STAND DER TECHNIK

Die Herstellung von Holzwerkstoffen wie Span-, Faser- oder OSB-Platten erfolgt durch "Verkleben" von lignocellulosehaltigem Material (beispielsweise Spänen, Fasern oder Strands) mit einer Bindemittelzusammensetzung. Zur Herstellung von beispielsweise Span-, Faser- oder OSB-Platten wird zunächst lignocellulosehaltiges Material in Form von Spänen, Fasern oder Strands bereitgestellt. Dieses lignocellulosehaltige Material wird anschließend beleimt, d.h. mit einer wässrigen Bindemittelzusammensetzung, einem Leim, versehen. Danach folgt die Bildung einer beleimten Span-, Faser- bzw. Strandmatte, die durch in Takt oder kontinuierlich arbeitenden Pressen unter Hitze und Druck zu einer Platte gepresst wird. In der Presse erfolgt die chemische Aushärtung, d.h. die im Wesentlichen vollständige Vernetzung der Bindemittelzusammensetzung, so dass eine feste Klebefuge entsteht.

Bei der Herstellung von Holzwerkstoffen kommen aufgrund ihrer Wirtschaftlichkeit und ihren guten mechanischen Eigenschaften immer noch vorwiegend aminoplastische Bindemittelzusammensetzungen zur Anwendung. Wirtschaftlich sind aminoplastische Bindemittelzusammensetzungen vor allem dadurch, dass die zugrundeliegenden Rohstoffe wie beispielsweise Harnstoff und Methanol kostengünstige, weitgehend erdgasbasierte, global verfügbare Massenrohstoffe sind. Aminoplastische Bindemittel enthalten in der Regel Formaldehyd, was bei den damit hergestellten Holzwerkstoffen zu einer Formaldehydemission führen kann.

Harnstoff-Formaldehyd-(UF)-Leime, als wichtigste Vertreter der Klasse der Aminoplastharze, sind nach wie vor die für die Holzwerkstoffindustrie wichtigste Bindemittelgruppe, u.a. auf Grund ihres niedrigen Preises im Vergleich zu anderen Bindemitteln, ihrer einfachen Handhabung und Verarbeitung sowie ihrer vielseitigen Anwendungsmöglichkeiten. Harnstoff-Formaldehyd-Leime sind zudem relativ lagerstabil und lassen sich daher in vorteilhafter Weise zentral bei den jeweiligen Herstellern (Leimfabriken) in einem Batchprozess in heiz- und kühlbaren Rührkesseln mit einem Fassungsvermögen von typischerweise 25-50 m³ aus den Hauptkomponenten Formaldehyd, Harnstoff und Wasser herstellen. Der in der Leimfabrik hergestellte Leim kann anschließend gelagert und an die Holzwerkstoffherstellbetriebe ausgeliefert werden. Dies hat den Vorteil, dass nicht jeder Holzwerkstoffherstellbetrieb eine eigene Leimfabrikationsanlage errichten, warten, betreiben und die entsprechende Personalexpertise vorhalten muss.

Nachteilig an dem Einsatz von Harnstoff-Formaldehyd-Leimen ist jedoch, dass es sowohl während als auch nach deren Verarbeitung in einem Holzwerkstoff zu einer temperatur- und feuchtigkeitsabhängigen, zeitlich abnehmenden Emission von Formaldehyd kommt. Formaldehyd, welches grundsätzlich in geringen Mengen auch ein immanenter Holzbestandteil ist, kann in verschiedenen Formen im Holzwerkstoff enthalten sein. Formaldehyd, das während des Produktionsprozesses aus dem aushärtenden und trocknenden Bindemittel freigesetzt wird, kann gasförmig in den Poren und Hohlräumen der Platten vorliegen und/oder gelöst im Wasser des Holzwerkstoffs (Holzfeuchte). Dieses Formaldehyd kann bereits bei üblichen Umgebungsbedingungen freigesetzt werden. Zusätzlich kann Formaldehyd, wenn auch in deutlich geringerem Ausmaß, aus dem bereits ausgehärteten Leim und damit aus der Platte ausgasen. Quelle für dieses Formaldehyd sind labile Polymerbestandteile. Dies sind insbesondere die innerhalb der Polymerkette vorhandenen Methylenethergruppen. Diese werden aber nur bei stringenten Hydrolysebedingungen, insbesondere bei Einfluss hoher Feuchtigkeit in Verbindung mit Wärme und/oder Säureeinfluss, gespalten. Weniger Einfluss auf die Menge an freigesetztem Formaldehyd haben die endständigen reaktiven und damit metastabilen Methylol(end)gruppen, da diese in den ausgehärteten Leimfugen praktisch nicht mehr vorhanden sind.

Die Freisetzung von Formaldehyd ist jedoch unerwünscht, da Formaldehyd in vielen Ländern als gesundheitsgefährdend eingestuft ist oder zumindest diesbezüglich in Verdacht steht. Die dieser Erfindung zugrundeliegende Aufgabe war es daher, nach Lösungen zu suchen, die das Problem der Formaldehydemission von Holzwerkstoffen weiter minimieren ohne auf Harnstoff-Formaldehyd-Leime verzichten zu müssen.

### HINTERGRUND DER ERFINDUNG

Um die nachträgliche Formaldehydabgabe aus Holzwerkstoffen, die mit einem Harnstoff-Formaldehyd-Leim hergestellt wurden, zu vermindern, verfolgte die dieser Erfindung zugrundeliegende Forschung zur Lösung der vorgenannten Aufgabe zunächst den Ansatz, das Molverhältnis von Formaldehyd zu Harnstoff (F/U-Molverhältnis) im Harnstoff-Formaldehyd-Leim bei dessen Herstellung zu reduzieren.

Dabei wurde ein dreistufiges Herstellungsverfahren für den Harnstoff-Formaldehyd-Leim entwickelt. In der ersten Phase, der sogenannten Methylolierungs- oder Vorkondensationsphase, wird Harnstoff in schwach alkalischem Milieu bei erhöhter Temperatur mit Formaldehyd in wässriger Lösung zur Reaktion gebracht. Dabei entstehen in Abhängigkeit vom eingesetzten F/U-Molverhältnis niedermolekulare Methylolharnstoffe, die grundsätzlich noch wasserlöslich sind. Typischerweise erstreckt sich das eingesetzte F/U-Molverhältnis von 1,9 bis 2,1. In der anschließenden Kondensationsphase werden im schwach sauren Milieu (pH 4,5 bis 5,5) bei Temperaturen von 90 bis 95 °C durch weitere Reaktion der Methylolharnstoffe untereinander komplexe Gemische aus Kondensationsprodukten mit unterschiedlichen Molmassen gebildet. Ab einem bestimmten Molekulargewicht sind diese Kondensationsprodukte nicht mehr wasserlöslich und es entsteht eine Dispersion, die sich optisch durch eine Eintrübung des Leims bemerkbar macht. Es wurde herausgefunden, dass auch in dieser Kondensationsphase ein F/U-Molverhältnis von 1,9 bis 2,1 wichtig ist, um die Kondensation einerseits prozesssicher und andererseits effizient (rasch genug) durchführen zu können. Die Kondensationsreaktion wird bei Erreichen des gewünschten Kondensationsgrades, welcher über die Viskosität abgeschätzt werden kann, durch Laugenzugabe (Einstellen eines pH-Wertes von 7,5 bis 9,0) beendet. In der darauffolgenden Nachkondensationsphase versuchte die dieser Erfindung zugrundeliegende Forschung durch Zusatz größerer Mengen an Harnstoff das endgültige F/U-Molverhältnis des fertigen Leims drastisch herabzusetzen.

Diese Harnstoffzugabe sollte nicht nur das F/U-Molverhältnis im Leim verringern, sondern auch dazu beitragen, dass bei der Heißhärtung freiwerdendes sowie nachträglich noch im Holzwerkstoff vorhandenes freies Formaldehyd gebunden wird. Das Herabsetzen des F/U-Molverhältnisses am Ende der Leimherstellung führte zwar zu einer Absenkung der nachträglichen Formaldehydabgabe aus den damit hergestellten Harnstoff-Formaldehyd-verleimten Holzwerkstoffen, zog jedoch andere Probleme nach sich.

Zunächst reagiert der nachträglich hinzugegebene Harnstoff mit den Methylolgruppen des Harzes und verringert damit die Vernetzungsmöglichkeiten bei der Aushärtung. Vermutlich weil Formaldehyd in Harnstoff-Formaldehyd-Harzen die eigentliche reaktive Komponente darstellt und für eine ausreichende Vernetzung beim Aushärten erforderlich ist, führte die Absenkung des Formaldehydanteils im Harnstoff-Formaldehyd-Leim zu einer niedrigeren Reaktivität des Harzes und damit einhergehend zu einer Verzögerung der Aushärtung beim Heißverpressen und einem verringerten Vernetzungsgrad im Holzwerkstoff. Die so hergestellten Holzwerkstoffe wiesen verschlechterte mechanische und hygroskopische Eigenschaften auf. Herabgesetzt wurde insbesondere die Querzugfestigkeit und Schraubenauszugsfestigkeit dieser Holzwerkstoffe. Diese Nachteile mussten in der Folge beispielsweise durch Presszeitverlängerungen und Erhöhung der Beleimgrade kompensiert werden. Außerdem stiegen die Dickenquellung und die Wasseraufnahme an.

Zusätzlich wiesen Harnstoff-Formaldehyd-Harze mit herabgesetztem F/U-Molverhältnis einen abgesenkten Aushärtungsgrad auf, so dass es zu einem teilweise verbleibenden thermoplastischen Verhalten des ausgehärteten Harzes kam. Holzwerkstoffe, die mit einem derartigen Harnstoff-Formaldehyd-Leim hergestellt wurden, benötigten daher nach dem Verlassen der Heißpresse deutlich verlängerte Abkühlzeiten bis zum Erreichen der Formstabilität.

Eine besondere Schwierigkeit beim Umgang mit Harnstoff-Formaldehyd-Leimen, bei denen durch nachträgliche Zugabe von Harnstoff ein deutlich herabgesetztes F/U-Molverhältnis eingestellt wurde, war jedoch die für die Holzwerkstoffherstellung zu geringe Viskosität des Leims, welche durch den stark viskositätsmindernden, d.h. "leimverdünnenden" Effekt des Harnstoffs verursacht wurde. Die Viskosität eines Leims ist neben dem Anteil an niedermolekularen Verbindungen wie Wasser und Harnstoff üblicherweise abhängig von dem Kondensationsgrad der im Leim enthaltenen Harzgrundkörper, d.h. der oligomeren bzw. polymeren Moleküle, sowie vom Festharzgehalt. Die Harnstoffzugabe am Ende einer Harnstoff-Formaldehyd-Leimkondensation reduziert den Absolutanteil an vorkondensiertem Harz im Harnstoff-Formaldehyd-Leim und damit auch die Reaktivität des fertigen Leims.

Die richtige Viskosität bzw. der richtige Kondensationsgrad des Leims ist in der Holzwerkstoffherstellung jedoch von größter Bedeutung. Ist die Viskosität bzw. der Kondensationsgrad des Leims zu niedrig, dringt ein großer Anteil des Leims in das lignocellulosehaltige Material ein, d.h. es kommt zu einem "Wegschlagen" des Leims in das lignocellulosehaltige Material, so dass zu wenig Leim in der eigentlichen Leimfuge verbleibt und die Leimfuge "verhungert". Dadurch kann sich keine ausreichende Bindefestigkeit ausbilden. Der daraus resultierende Mehreinsatz von Bindemittel ist nicht nur wirtschaftlich nachteilig, sondern auch eine potentielle Quelle einer, durch Leimhydrolyse verursachten, unerwünschten Erhöhung der Formaldehydemission aus der fertigen Platte. Ist die Viskosität des Leims zu hoch, findet keine gleichmäßige Leimverteilung bzw. keine ausreichende Benetzung der Oberflächen des lignocellulosehaltigen Materials statt. In beiden Fällen ist die Folge, dass keine ausreichende Verbindung des Leims mit dem lignocellulosehaltigen Material erlangt wird.

Da die Harnstoffzugabe in der Nachkondensationsphase als ein vielversprechender Weg erschien, um Harnstoff-Formaldehyd-Leime mit herabgesetztem F/U-Molverhältnis zu erzeugen, wurde nach Möglichkeiten gesucht, der Verringerung des Absolutanteils an viskositätsbestimmenden Harzgrundkörpern durch die nachträgliche Harnstoffzugabe entgegenzuwirken. Die der Erfindung zugrungeliegende Forschung versuchte dabei zunächst, den Kondensationsgrad der Harzgrundkörper in der konventionellen Kondensationsphase der Leimherstellung, d.h. im Batch-Reaktor Prozess, deutlich zu erhöhen, mit dem Ziel einen hydrolysestabileren Polymethylenharnstoff-Harzgrundkörper zu erhalten, um trotz der durch die hohe Harnstoffzugabe bedingten Viskositätserniedrigung noch eine ausreichende Viskosität des Leimes zu gewährleisten.

Es zeigte sich jedoch, dass die notwendige starke Erhöhung des Kondensationsgrades durch eine Intensivierung der Kondensationsphase während der Leimherstellung erhebliche sicherheitstechnische und verfahrenstechnische Risiken barg. Durch die exponentiell ansteigende Viskosität des Leims gegen Ende der Kondensationsreaktion kam es insbesondere oftmals zu einem Gelieren, d.h. zu einem Aushärten des Leims im Reaktor, was mit Stillstand der Produktion und aufwändigen Reinigungsarbeiten einherging. Eine weitere Konsequenz der Erhöhung des Kondensationsgrades im Harnstoff-Formaldehyd-Leim war, dass es aufgrund des Mangels an wasserlöslichen, niedrigmolekularen und methylolgruppenreichen Molekülanteilen, die phasenvermittelnd wirken, zu einer erheblichen Beeinträchtigung der Lagerstabilität der erzeugten Harnstoff-Formaldehyd-Leime kam. Dieser Ansatz erschien daher nicht sehr vielversprechend.

Dies änderte sich erst als der Erfinder überraschend erkannte, dass mittels des Einsatzes einer reaktiven Extrusion, insbesondere direkt vor Ort im Holzwerkstoffherstellungsbetrieb, die gewünschte hochgradige Kondensation erreicht werden kann und die ansonsten befürchteten und beobachteten Nachteile und Prozessrisiken vermieden werden können. Insbesondere führt die Extrusion zu einer extrem effizienten und starken Zwangsmischung und Zwangsförderung, welche die zeitweilig erreichten hohen Viskositäten beherrschbar machen. Der Erfinder erkannte zudem, dass der im Extruder aufgebaute Druck direkt weitergenutzt werden kann, um den im Extruder hergestellten Leim auf das lignocellulosehaltige Material mittels einer Leimapplikationsvorrichtung aufzutragen. Durch die von der Extrusion ermöglichte direkte Weiterverarbeitung ohne Zwischenlagerung kommt es auf die im Stand der Technik bei zentraler Herstellung in Leimfabriken zum Ausliefern erforderliche Lagerstabilität des Leims gar nicht mehr an.

Der Erfinder erkannte im Zuge seiner Forschung ferner, dass durch den Einsatz eines Extruders und der Verlagerung der Leimherstellung in die Holzwerkstoffherstellungsbetriebe ein besonders vorteilhafter übergreifend kontinuierlicher Prozess zwischen Leimherstellung und Holzwerkstoffherstellung ermöglicht wird, der die für die Benutzung von formaldehydarmen Harnstoff-Formaldehyd-Leimen erforderliche hochgradige Kondensation unter Verwendung von phasenvermittelnden Additiven und der damit möglichen teilweisen Reduktion der Harnstoffmengen in besonders praxisgerechter und prozesssicherer Form ermöglicht. Der Einsatz eines Extruders bei der Herstellung von Harnstoff-Formaldehyd-Leimen zeigte darüber hinaus aber auch noch weitere Vorteile, wie weiter unten im Einzelnen erläutert wird.

### ZUSAMMENFASSUNG DER ERFINDUNG

Wie vorstehend bereits erläutert bestand eine Aufgabe der Erfindung darin, ein einfaches Verfahren bereitzustellen, welches die Herstellung von formaldehydemissionsarmen Holzwerkstoffen mit guten mechanischen und hygroskopischen Eigenschaften durch Verklebung mit einem Harnstoff-Formaldehyd-Leim ermöglicht, der ein abgesenktes F/U-Molverhältnis aufweist. Darüber hinaus ist es eine Aufgabe der Erfindung, eine weitere Absenkung des Formaldehydanteils in Harnstoff-Formaldehyd-Leimen zur Reduktion der Formaldehydemission daraus hergestellter Holzwerkstoffe zu ermöglichen, insbesondere unter gleichzeitigem Erhalt der mechanischen und hygroskopischen Eigenschaften der damit hergestellten Holzwerkstoffe.

Insgesamt ist die Aufgabe der Erfindung darin zu sehen, formaldehydemissionsarme aminoplastisch gebundene Holzwerkstoffe, die gute mechanische und hygroskopische Eigenschaften aufweisen, und ein besonders praktikables Verfahren zu deren Herstellung bereitzustellen.

Diese Aufgaben werden erfindungsgemäß durch das in Anspruch 1 angegebene Verfahren, die in Anspruch 10 angegebene Vorrichtung, das in Anspruch 13 angegebene Erzeugnis und die in den Ansprüchen 14 und 15 angegebenen Verwendungen gelöst.

Das erfindungsgemäße Verfahren zur Herstellung eines aminoplastisch gebundenen Holzwerkstoffs umfasst die folgenden Schritte:
a. Bereitstellen einer Mischung umfassend ein Harnstoff-Formaldehyd-Kondensat;
b. Reaktive Extrusion der Mischung aus Schritt a. in mindestens einem Extruder, wodurch ein extrudierter Leim erhalten wird;
c. Beleimung von lignocellulosehaltigem Material durch Aufbringen einer Leimflotte enthaltend oder bestehend aus dem extrudierten Leim aus Schritt b. auf das lignocellulosehaltige Material, wobei das Aufbringen mittels einer Leimapplikationseinrichtung erfolgt;
d. Verpressen des beleimten lignocellulosehaltigen Materials aus Schritt c. unter Druck- und Temperatureinwirkung zu einem Holzwerkstoff.

Der Erfinder hat herausgefunden, dass die reaktive Extrusion einer Mischung enthaltend ein Harnstoff-Formaldehyd-Kondensat in einem Extruder hervorragend dazu geeignet ist, Leim mit viskositätserhöhenden hochkondensierten, d.h. hochmolekularen Molekülanteilen in verfahrenstechnisch sicherer Art und Weise zu erzeugen. Dies ist insbesondere vorteilhaft, da so der viskositätsmindernde und vor allem reaktivitätsmindernde Effekt einer darauffolgenden Harnstoffzugabe zur Einstellung eines abgesenkten F/U-Molverhältnisses in äußerst effizienter und prozesssicherer Art und Weise kompensiert werden kann. Der Einsatz einer reaktiven Extrusion in einem Extruder zur (zumindest intermediären) Erhöhung des Kondensationsgrades des Leimes und der damit verbundenen erhöhten Viskosität hat sich in diesem Zusammenhang als besonders vorteilhaft erwiesen. Der Extruder ermöglicht durch Einstellen der entsprechenden Temperatur- und Scherbedingungen eine optimal regulierbare weitere Kondensation des Leimes. Gleichzeitig erlaubt die Extrusion durch die zusätzlich stattfindende Zwangsförderung ein äußerst effizientes und prozesssicheres Mischen und/oder Kneten des intermediär erhaltenen äußerst hochviskosen Leims, so dass auch die kondensationsbedingte Reduktion an phasenvermittelnden niedermolekularen Kondensationsprodukten kompensiert werden kann. Im erfindungsgemäßen Verfahren können eine gewünschte Endviskosität und ein gewünschtes abgesenktes F/U-Molverhältnisses einfach und prozesssicher durch Harnstoffzugabe im Extruder eingestellt werden. Zudem eignet sich die Extrusion auch in hervorragender Weise zur Zugabe von weiteren Zusatzstoffen, die insbesondere als Viskositätsregler oder Phasenvermittler dienen können. Die Erfindung hat bezüglich der für die Extrusion besonders geeigneten Zusatzstoffe grundlegend neue Erkenntnisse zutage gebracht.

Der im erfindungsgemäßen Verfahren hergestellte extrudierte Leim eignet sich in besonders hervorragender Weise zur Holzwerkstoffherstellung. Dies liegt unter anderem daran, dass der extrudierte Leim trotz niedrigem endgültigem F/U-Molverhältnis eine einfach einzustellende geeignete Endviskosität aufweist, welche das direkte Beleimen von lignocellulosehaltigem Material, insbesondere durch Aufsprühen mittels einer Leimapplikationsvorrichtung, erlaubt, ohne dass es zu einem "Wegschlagen" des Leims und einem "Verhungern" der Leimfuge oder zum Gegenteil, nämlich zu einer unzureichenden Benetzung des lignocellulosehaltigen Materials, kommt. Erfindungsgemäß kann entweder der extrudierte Leim direkt als Leimflotte auf das lignocellulosehaltige Material aufgebracht werden oder es wird im Anschluss an die reaktive Extrusion eine Leimflotte enthaltend den extrudierten Leim und weitere Komponenten hergestellt. Wenn hier von Aufbringen des "Leims" auf lignocellulosehaltiges Material oder "Beleimen" desselben die Rede ist, dann ist damit sowohl die Verwendung einer Leimflotte gemeint, die aus dem extrudierten Leim besteht, als auch diesen enthalten kann.

Als besonders vorteilhaft für die Beleimung des lignocellulosehaltigen Materials mit dem extrudierten Leim hat sich das Aufbringen mittels einer Leimapplikationseinrichtung erwiesen. Bevorzugt ermöglicht die Leimapplikationseinrichtung das Aufsprühen des extrudierten Leims auf das lignocellulosehaltige Material. Durch das Aufsprühen lässt sich eine ausgezeichnete Homogenität in der Leimverteilung erzielen. Außerdem hat der Erfinder erkannt, dass der im Extruder aufgebaute Druck auch direkt zum Aufsprühen des Leims verwendet werden kann oder dazu beitragen kann, wenn die Leimapplikationseinrichtung an den Extruder angeschlossen ist.

Im Bereich der Aminoplaste ist der Einsatz von Extrudern im Stand der Technik bislang hauptsächlich für die Herstellung von Aminoplast-Formkörpern, nicht jedoch in der Holzwerkstoffproduktion oder bei der Herstellung von Harnstoff-Formaldehyd-Leimen bekannt.

So offenbart WO 99/08856 ein Verfahren zur Herstellung von amino- und/oder phenoplastischen Formkörpern, wonach in einem ersten Extruder eine Vorkondensat-Lösung hergestellt wird. Diese Vorkondensat-Lösung wird unter Zugabe von Zuschlagstoffen kontinuierlich einem zweiten Extruder zugeführt bei teilweiser Befüllung im Einzugs- und Entgasungsbereich, im zweiten Extruder entgast und anschließend zu einem Endprodukt ausgeformt. Das Verfahren der WO 99/08856 ist auf ein wasserfreies System ausgerichtet und das Endprodukt des Verfahrens ein fester Amino- oder Phenoplastformkörper. Die WO 99/08856 offenbart nicht den Einsatz eines Extruders zur Herstellung eines extrudierten Leims, der zum Aufbringen auf lignocellulosehaltiges Material mittels einer Leimapplikationsvorrichtung oder zur Herstellung eines aminoplastisch gebundenen Holzwerkstoffs geeignet ist.

EP 1195 365 A1 betrifft ein Verfahren zur Herstellung von Methylenharnstoff-Polymeren zur Verwendung als Düngemittel, wobei zunächst Harnstoff zusammen mit einem Formaldehydprodukt in einen Mehrwellen-Extruder eingeleitet wird und die Produkte dort vermengt, verdichtet, erhitzt und zu einer fließfähigen Mischung aufgeschmolzen werden. Dieser wird Säure zugeführt, wobei eine Masse mit Methylenharnstoff-Polymeren gebildet wird. Die Masse wird anschließend ausextrudiert, ggf. noch granuliert und als Düngemittel verwendet. Die EP 1195 365 A1 liegt auf einem anderen technischen Gebiet als die Erfindung und offenbart nicht, einen Extruder zu verwenden, um einen extrudierten Leim zu erhalten, der zur Herstellung eines Holzwerkstoffs, insbesondere durch Aufbringen des extrudierten Leims auf lignocellulosehaltiges Material mittels einer Leimapplikationsvorrichtung, geeignet ist.

Abgesehen von der Herstellung von Formmassen mittels Extrudern, ist aus dem Aminoplast-betreffenden Stand der Technik lediglich die Herstellung von Melamin-Formaldehyd-Vorkondensaten mit Hilfe eines Extruders bekannt. Melamin-Formaldehyd-Harze unterscheiden sich jedoch grundlegend von den erfindungsgemäß einzusetzenden Harnstoff-Formaldehyd-Kondensaten, die lediglich mit Melamin modifiziert sein können. Durch die drei Amingruppen pro Melaminmolekül kommt es bei der Reaktion mit Formaldehyd zur Ausbildung engmaschiger dreidimensionaler Netzwerke, die eine hohe Viskosität bzw. Festigkeit von Melamin-Formaldehyd-Leimen bzw. -Harzen bedingen. Im Gegensatz hierzu kondensieren Harnstoff und Formaldehyd vornehmlich in linearen Polymerketten, was eine niedrigere Viskosität des Leims bedingt, und folglich der Einsatz eines Extruders für (Melamin-modifizierte) Harnstoff-Formaldehyd-Leime fernliegend erscheint.

Die EP 0 355 760 B1 offenbart im Zusammenhang mit Melamin-Formaldehyd-Harzen die Verwendung eines Extruders in einem kontinuierlichen Verfahren zur Herstellung eines wässrigen Melamin-Formaldehyd-Vorkondensats. Dabei soll das Verfahren insbesondere dazu dienen, die Herstellung eines hochviskosen Produkts zu ermöglichen, so wie es für die Herstellung von Schäumen und Fasern benötigt wird. Dazu wird Melamin, Formaldehyd und Wasser in einem kontinuierlich arbeitenden Mischer dosiert, die homogene Mischung in einen ein- oder zweiwelligen Extruder geleitet, bei Temperaturen von 70 °C bis 150 °C kondensiert, und danach abgekühlt und ausgetragen. Die EP 0 355 760 B1 offenbart jedoch keine reaktive Extrusion einer Mischung umfassend ein Harnstoff-Formaldehyd-Kondensat oder dass die Extrusion einer solchen Mischung mit der Aufbringung auf lignocellulosehaltiges Material verbunden werden kann. Insbesondere offenbart die EP 0 355 760 B1 keinen extrudierten Leim, der zur Herstellung eines Holzwerkstoffs, insbesondere durch Aufbringen des extrudierten Leims auf lignocellulosehaltiges Material mittels einer Leimapplikationsvorrichtung, geeignet ist. Im Gegenteil, das erhaltene Melamin-Formaldehyd-Vorkondensat soll gemäß EP 0 355 760 B1 derart hochviskos sein, wie es bei der Herstellung von Schäumen und Fasern benötigt wird. Derartig hochviskose Massen, wie sie bei der Herstellung von Schäumen und Fasern benötigt werden, können nicht durch eine Leimapplikationsvorrichtung aufgebracht werden.

Die von der Erfindung ebenfalls bereitgestellte Vorrichtung zur Durchführung des hier beschriebenen erfindungsgemäßen Verfahrens umfasst
i. einen Extruder,
ii. eine an den Extruder angeschlossene Leimapplikationseinrichtung,
iii. eine Einrichtung zum Verpressen von lignocellulosehaltigem Material zu einem Holzwerkstoff.

Als besonderer Vorteil der erfindungsgemäßen Vorrichtung hat sich erwiesen, dass ein Extruder zusammen mit einer daran angeschlossenen Leimapplikationseinrichtung eingesetzt wird. Dadurch kann das Produkt des Extruders, d.h. der extrudierte Leim, in einem kontinuierlichen Verfahren direkt auf das lignocellulosehaltige Material appliziert werden. Die Leimherstellung wird damit in die Holzwerkstoffherstellungsbetriebe verlagert. Während dies zunächst aus den oben beschriebenen Gründen nachteilig erschien, zeigte sich bei der Erprobung der Erfindung, dass ein übergreifend kontinuierlicher Prozess zwischen Leimherstellung und Holzwerkstoffherstellung überraschende Vorteile bieten kann. So können beispielsweise chargenbedingte Abweichungen in der Leimherstellung weitestgehend vermieden werden. Außerdem kommen durch die unterbleibende oder extrem kurze Lagerung des Leims in dem erfindungsgemäßen Verfahren und der Vorrichtung sonstige durch eine starke Hochkondensation verbundene Nachteile wie Prozessrisiken und reduzierte Lagerstabilität nicht zum Tragen. Die für das erfindungsgemäße Verfahren beschriebenen Vorteile gelten daher auch gleichermaßen für die erfindungsgemäßen Vorrichtungen, Holzwerkstoffe und Verwendungen.

Die erfindungsgemäß erhältlichen Holzwerkstoffe sind aufgrund der Möglichkeit eines Einsatzes von Harnstoff-Formaldehyd-Leimen mit besonders abgesenkten F/U-Molverhältnissen besonders formaldehydemissionsarm. Dieser Vorteil wird durch den erfindungsgemäßen Einsatz einer reaktiven Extrusion zur Erhöhung des Kondensationsgrades ermöglicht, welche den viskositätsmindernden Effekt einer darauffolgenden Harnstoffzugabe zur Einstellung eines abgesenkten F/U-Molverhältnisses in äußerst effizienter Weise kompensieren kann. Außerdem wird durch die reaktive Extrusion vornehmlich Polymethylenharnstoff als Harnstoff-Formaldehyd-Kondensationsprodukt gebildet, welches sehr hydrolysestabil und folglich formaldehydemissionsarm ist.

Die Erfindung betrifft daher auch die Verwendung einer reaktiven Extrusion für eine Mischung umfassend ein Harnstoff-Formaldehyd-Kondensat zur Herstellung besonders formaldehydemissionsarmer Holzwerkstoffe. Dabei hat der Erfinder herausgefunden, dass die Verwendung von Ligninsulfonat und/oder Zucker als Phasenvermittler und/oder Viskositätsregler in der reaktiven Extrusion einer Mischung umfassend ein Harnstoff-Formaldehyd-Kondensat für Holzwerkstoffe besonders vorteilhaft ist, was daher ebenfalls Gegenstand der Erfindung ist.

Vorteilhafte Ausgestaltungen der Erfindung sind in den abhängigen Ansprüchen angegeben und werden nachfolgend zusammen mit der allgemeinen erfinderischen Idee im Einzelnen erläutert.

### DETAILLIERTE BESCHREIBUNG DER ERFINDUNG

Wenn hierin die Begriffe "umfassen"/"umfassend" oder "enthalten"/" enthaltend" verwendet werden, ist dies auch als eine Offenbarung für "bestehend aus" gemeint. D.h. eine Zusammensetzung, die gemäß der vorliegenden Offenbarung X umfasst oder enthält, kann ausschließlich aus X bestehen oder etwas Zusätzliches beinhalten, z.B. X + Y. Wenn hierin für Begriffe der Singular oder die Artikel ein/eine oder der/die/das verwendet werden (z.B. ein Harnstoff-Formaldehyd-Kondensat) sind automatisch ebenfalls die entsprechenden Pluralbezeichnungen mit inbegriffen, außer wenn der jeweilige Kontext dies klar verbietet.

Die hier und an anderer Stelle offenbarten Ausführungsformen, Mengenangaben und Verhältnisse sind beliebig miteinander kombinierbar. Es ist ausdrücklich vorgesehen, dass die Erfindung jede einzelne Kombination an Mengenangaben und Verhältnissen umfasst. Insbesondere sind die Mengenangaben auf der gleichen "Bevorzugungsebene" aufeinander abgestimmt und daher besonders miteinander kombinierbar.

### Verfahren

Das erfindungsgemäße Verfahren dient zur Herstellung eines aminoplastisch gebundenen Holzwerkstoffs. Darunter ist ein Holzwerkstoff zu verstehen, der mit Hilfe eines Aminoplastharzes hergestellt wurde. Aminoplastharze (aminoplastische Bindemittel) sind dem Fachmann bekannt und z.B. in "Ullmanns Enzyklopädie der technischen Chemie", 4. Auflage, Band 7, S. 403ff. beschrieben. Aminoplastharze werden durch Kondensation eines Amino-, Imino- oder Amidgruppen enthaltenden Bestandteils mit einer Carbonylverbindung erhalten. Erfindungsgemäß ist ein mindestens einzusetzendes Aminoplastharz ein Harnstoff-Formaldehyd-Kondensat. Dessen Ausgangsmaterialien sind Harnstoff (als Aminogruppen enthaltender Bestandteil) und Formaldehyd (als Carbonylverbindung).

Wenn hierin von Aminoplastharz die Rede ist, dann ist damit nicht nur das feste Kondensationsprodukt, also der eigentliche Aminoplast, gemeint, sondern auch die zugrundeliegenden flüssigen Aminoplastharzzusammensetzungen, welche die Ausgangsstoffe zur Herstellung eines Aminoplasten, also mindestens einen Amino-, Imino- oder Amidgruppen enthaltenden Bestandteil (erfindungsgemäß mindestens Harnstoff) und eine Carbonylverbindung (erfindungsgemäß mindestens Formaldehyd) und Kondensate davon enthalten. Der Begriff "Kondensat" oder "kondensiert" umfasst im Sinne der Erfindung insbesondere auch Vorkondensate. Diese sind im Vergleich zum auskondensierten Aminoplastharz niedermolekular und werden weiter unten im Detail beschrieben. Aminoplastharzzusammensetzungen enthalten typischerweise Wasser. Als Oberbegriff für diese flüssigen, wässrigen Aminoplastharzzusammensetzungen enthaltend Harnstoff, Formaldehyd und (Vor)kondensate daraus wird hier der Begriff "Mischung umfassend ein Harnstoff-Formaldehyd-Kondensat" verwendet, insbesondere für eine flüssige, wässrige Aminoplastharzzusammensetzung, welche mittels einer Leimapplikationsvorrichtung auf lignocellulosehaltiges Material in der Holzwerkstoffproduktion aufgebracht werden kann. Die Mischung umfassend ein Harnstoff-Formaldehyd-Kondensat enthält neben dem Kondensat selbst typischerweise auch Wasser. Die Mischung umfassend ein Harnstoff-Formaldehyd-Kondensat kann des Weiteren verschiedene Arten von Harnstoff-Formaldehyd-Kondensaten enthalten. Die enthaltenen Kondensate können sich beispielsweise im Kondensationsgrad unterscheiden. Abhängig vom Kondensationsgrad der Harnstoff-Formaldehyd-Kondensate in der erfindungsgemäß einzusetzenden Mischung kann die Mischung noch als Lösung (d.h. klare Flüssigkeit) oder bereits als Dispersion (trübe Flüssigkeit) vorliegen.

### Schritt a.

Das erfindungsgemäße Verfahren umfasst als Schritt a. das Bereitstellen einer Mischung umfassend ein Harnstoff-Formaldehyd-Kondensat. Die Mischung umfassend ein Harnstoff-Formaldehyd-Kondensat aus Schritt a. ist eine flüssige Aminoplastharzzusammensetzung, die zumindest Vorkondensate der Ausgangsstoffe Harnstoff und Formaldehyd enthält. In einer Ausführungsform ist das Harnstoff-Formaldehyd-Kondensat ein Methylolharnstoff und/oder Vorkondensat. Optional ist die Mischung enthaltend ein Harnstoff-Formaldehyd-Kondensat aus Schritt a. bereits ein Harnstoff-Formaldehyd-Leim, d.h. bereits zum Aufbringen auf lignocellulosehaltiges Material mittels einer Leimapplikationsvorrichtung und zur Verklebung von lignocellulosehaltigem Material in der Holzwerkstoffproduktion geeignet. In einer Ausführungsform ist die in Schritt a. eingesetzte Mischung ein melaminmodifizierter Harnstoff-Formaldehyd-Leim, der bis zu 10 Gew.-% Melamin bezogen auf das Gesamtgewicht des Leims enthält. Auch Mengen von 10 Gew.-% bis 25 Gew.-% Melamin, bezogen auf das Gesamtgewicht des Leims, haben sich bewährt, wenn eine besonders feste und/oder schnellhärtende Leimfuge gewünscht ist.

In einer Ausführungsform des erfindungsgemäßen Verfahrens besitzt die in Schritt a. bereitgestellte Mischung einen Wassergehalt von 25 bis 60 Gew.%, bevorzugt von 30 bis 50 Gew.% und insbesondere bevorzugt von 32 bis 45 Gew.% bezogen auf das Gesamtgewicht der Mischung.

In einer Ausführungsform ist oder enthält die in Schritt a. eingesetzte Mischung ein Harnstoff-Formaldehyd-Konzentrat (Urea Formaldehyde Concentrate, UFC). UFC ist in der Praxis der typische Ausgangsstoff für die Herstellung von Aminoplastharzen, wie beispielsweise Leime für die Spanplattenindustrie. Unter UFC versteht der Fachmann eine wässrige Lösung hergestellt aus Formaldehyd und Harnstoff, welche im Gegensatz zur reinen wässrigen Lösung von Formaldehyd sehr lagerstabil und prozesssicherer ist. Die Herstellung von UFC erfolgt üblicherweise als Folgeschritt nach der Formaldehyd-Synthese. Dabei wird das gasförmige Formaldehyd in einer wässrigen Harnstoff-Lösung absorbiert. Das UFC wird typischerweise nicht in einem Rührkessel, sondern direkt in einem Absorptionsturm einer Formaldehydanlage aus den Rohstoffen, die in Form einer Harnstofflösung und gasförmigem Formaldehyd vorliegen, durch Reaktion in einem pH-Bereich von 6,5 bis 9,5 erhalten. Chemisch enthält UFC Wasser, Harnstoff, gelöstes Formaldehyd und Mono-, Di- und Trimethylolharnstoffe. UFC ist eine klare bis leicht trübe Flüssigkeit, die stark nach Formaldehyd riecht. UFC hat typischerweise eine Viskosität von 75 bis 500 mPa·s gemessen bei 20 °C und einem Schergefälle von D=200 1/s, ein F/U-Molverhältnis zwischen 3,5 und 5,5. Im UFC beträgt die Summe der Gehälter an eingesetztem Formaldehyd und Harnstoff bevorzugt 70 bis 85 Gew.- % bezogen auf das Gesamtgewicht des UFC. Vorteilhaft an dem Einsatz eines derartigen Harnstoff-Formaldehyd-Konzentrats in Schritt a. ist, dass das UFC im Vergleich zu Standard-Harnstoff-Formaldehyd-Leimen einen sehr hohen Feststoffgehalt aufweist. Das UFC stellt außerdem auch kein Gefahrgut dar und kann somit ohne aufwändige Sicherheitsvorkehrungen zu den holzwerkstoffherstellenden Betrieben transportiert werden.

In einer anderen Ausführungsform ist die Mischung umfassend ein Harnstoff-Formaldehyd-Kondensat eine Mischung, welche bereits die sogenannte Methylolierungs- oder Vorkondensationsphase der Aminoplastharzherstellung durchlaufen hat. Bei dem Harnstoff-Formaldehyd-Kondensat handelt es sich mithin also um ein Vorkondensat. So kann die in Schritt a. bereitgestellte Mischung erhalten werden durch zur Reaktion bringen von Harnstoff in vorzugsweise schwach saurem bis alkalischem Milieu (pH von 4,0 bis 9,5) bei erhöhter Temperatur (30 °C bis 95 °C) mit Formaldehyd in wässriger Lösung. Vorzugsweise erstreckt sich das F/U-Molverhältnis bei der Reaktion von 1,9 bis 2,1. So ist am besten gewährleistet, dass sich zahlreiche niedermolekulare Methylolharnstoffe bilden, die grundsätzlich noch wasserlöslich sind.

Die "Methylolierung" von Harnstoff, wie hier verwendet, beinhaltet zumindest die folgende Reaktion:

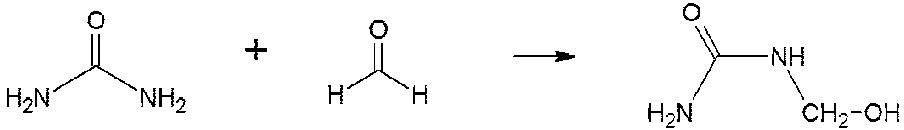

Die aus der Reaktion erhaltenen Methylolharnstoffe bilden zusammen mit dem noch vorhandenen Formaldehyd bzw. dem Reaktionsprodukt mit Wasser (Methylenglykol) die Hauptbestandteile des so erhaltenen Vorkondensates.

In untergeordnetem Maße sind auch schon Vorkondensate enthalten wie sie nach der folgenden Reaktion in der sogenannten "Vorkondensationsphase" gebildet werden können.

Die "Vorkondensationsphase", wie hier verwendet, schließt sich an die Methylolierungsphase an und beinhaltet zumindest die folgende Reaktion:

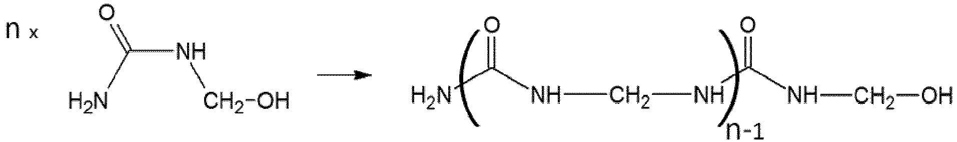

Die Nachkondensationsphase zur Herstellung von sehr hochmolekularen weitestgehend wasserunlöslichen Kondensaten wird dann erfindungsgemäß im Extruder fortgesetzt.

Die reaktiven Extrusion in Schritt b. wird dann bevorzugt so durchgeführt, dass vor dem ersten Extruderabschnitt der eingesetzten Mischung weiterer Harnstoff zugemischt wird, wodurch weitere niedermolekulare Methylolharnstoffe gebildet werden. In dem folgenden Extruderabschnitt erfolgt dann die eigentliche Haupt- bzw. Nachkondensationsreaktion der Methylolharnstoffe untereinander. Hierbei werden wie in der klassischen Aminoplastharzherstellung komplexe Gemische aus aminoplastischen Kondensationsprodukten mit unterschiedlichen Molmassen gebildet, was sich optisch in der Eintrübung des Leims und rheologisch in einer Erhöhung der Viskosität niederschlägt.

Es kann im erfindungsgemäßen Verfahren als Mischung umfassend ein Harnstoff-Formaldehyd-Kondensat auch ein Harnstoff-Formaldehyd-Leim und/oder ein melaminmodifizierter Harnstoff-Formaldehyd-Leim eingesetzt werden. Hierbei handelt es sich um Mischungen umfassend ein Harnstoff-Formaldehyd-Kondensat, welche bereits die Methylolierungs-, Vorkondensations- oder Kondensationsphase der Leimherstellung durchlaufen haben. Im einfachsten Fall kann konventioneller, in einer Leimfabrik für die Holzwerkstoffindustrie hergestellter Harnstoff-Formaldehyd-Leim in Schritt a. eingesetzt werden. Das erfindungsgemäße Verfahren, dass dann eine "Nachkondensation" vor dem Aufbringen auf das lignocellulosehaltige Material im Holzwerkstoffherstellbetrieb darstellt, erlaubt die Veredelung und Einstellung des Harnstoff-Formaldehyd-Leims vor Ort. Insbesondere kann durch das erfindungsgemäße Verfahren der Kondensationsgrad des Harnstoff-Formaldehyd-Leims in der reaktiven Extrusion noch einmal stark erhöht werden, was mit einer Harnstoffzugabe und damit verbundenen Reduktion des F/U-Molverhältnisses ohne nachteilige Effekte auf die Endviskosität kombiniert werden kann.

Ein Harnstoff-Formaldehyd-Leim ist ein bei pH-Absenkung und gleichzeitiger Temperaturerhöhung rasch selbstvernetzendes Bindemittel. Gemäß einer Ausführungsform ist die in Schritt a. eingesetzte Mischung ein Harnstoff-Formaldehyd-Leim, der bereits die Vorkondensations- oder Kondensationsphase der Leimherstellung durchlaufen hat. Er setzt sich aus einer Mischung bzw. einem Co-Kondensat von Aminoplastharzanteilen mit NH₂-Endgruppen (Komponente A) und Aminoplastharzanteilen mit vernetzenden, reaktiven Methylol-Endgruppen (Resultat der Umsetzung einer NH₂-Endgruppe mit Formaldehyd: Komponente B) zusammen. Diese Methylolgruppen sind pH-stabilisiert und daher bei Raumtemperatur wenig reaktiv, d.h. langsam in der Weiterreaktion, nämlich der Selbstkondensation. Sie bedingen aber letztendlich, abhängig von der Anzahl der reaktiven Gruppen und der Art der Stabilisierung, die Lagerstabilität bzw. umgekehrt die Reaktivität der betreffenden Leimsysteme.

Die in Schritt a. eingesetzte Mischung umfassend ein Harnstoff-Formaldehyd Kondensat liegt als Lösung oder Dispersion vor. In einer bevorzugten Ausführungsform des erfindungsgemäßen Verfahrens liegt die Mischung umfassend ein Harnstoff-Formaldehyd-Kondensat aus Schritt a. als eine im Wesentlichen einphasige Zusammensetzung vor. Dies ist vermutlich darauf zurückzuführen, dass niedrigmolekulare, wasserlösliche und methylolgruppenreiche Anteile in der Mischung phasenvermittelnd wirken. Im Wesentlichen einphasig bedeutet dabei, dass mit dem bloßen Auge keine Phasentrennung feststellbar ist. In der Praxis kann es sich dabei nichtsdestotrotz um eine mikroskopisch fein dispergierte Dispersion handeln. Bei der Dispersion handelt es sich in der Regel um eine Emulsion (im Extremfall teilweise Suspension) von hochmolekularen und damit eher wasserunverträglichen bereits kondensierten Leimbestandteilen in Wasser oder einer wässrigen Lösung der Ausgangsstoffe und Methylolharnstoff-Vorkondensaten.

Die in Schritt a. eingesetzte Mischung besitzt in jedem Fall die Fähigkeit zur weiteren Kondensation. Demnach ist die Mischung umfassend ein Harnstoff-Formaldehyd-Kondensat aus Schritt a. noch nicht vollständig vernetzt. Sie ist in jedem Fall bei Raumtemperatur flüssig.

Die Viskosität der in Schritt a. bereitgestellten Mischung kann von 100 bis 1000 mPa·s, bevorzugt von 150 bis 900 mPa·s und insbesondere bevorzugt von 200 bis 800 mPa·s, gemessen bei 20 °C und einem Schergefälle von D=200 1/s, betragen. Dies stellt sicher, dass die eigentliche Nachkondensation und damit verbundene Viskositätsherstellung erst in der nachfolgenden reaktiven Extrusion in Schritt b. erfolgt, was im Hinblick auf die Phasenvermittlung und Durchmischung sowie in Bezug auf Prozess- und Sicherheitsrisiken besonders vorteilhaft ist.

Dem Fachmann sind Methoden zur Bestimmung der Viskosität einer Mischung umfassend Harnstoff-Formaldehyd-Kondensate aus der Leimherstellung bekannt. Dazu wird zunächst eine Probe entnommen und auf die Messtemperatur gebracht. Anschließend kann beispielsweise mittels eines Auslaufbechers, mittels eines Rotationsviskosimeters oder mittels der Gardner-Methode die Viskosität bestimmt werden. Bei letzterer Methode wird die Geschwindigkeit des Aufsteigens von Luftblasen in der Reaktionslösung mit der Geschwindigkeit in Testflüssigkeiten bekannter Viskosität verglichen. Die hier angegebenen Viskositäten lassen sich besonders akkurat mittels Kegel-Platte Rotationsviskosimeter (20°C, D = 200 1/s) bestimmen (EN ISO 3219).

Das Molverhältnis von eingesetztem Formaldehyd zu Harnstoff kann in der in Schritt a. bereitgestellten Mischung vorteilhafterweise von 0,75 bis 1,3, bevorzugt von 0,85 bis 1,2 und insbesondere bevorzugt von 0,9 bis 1,1 betragen. Dies ermöglicht eine besonders effektive Kondensation während der reaktiven Extrusion in Schritt b.

### Schritt b.

Das erfindungsgemäße Verfahren zur Herstellung eines aminoplastisch gebundenen Holzwerkstoffs umfasst als Schritt b. die reaktive Extrusion der Mischung umfassend ein Harnstoff-Formaldehyd-Kondensat aus Schritt a. in mindestens einem Extruder.

Wenn hierin von "Extruder" die Rede ist, ist damit eine Einrichtung gemeint, welche flüssige oder aufgeschmolzene Materialien durch Zwangsförderung in einem heiz- und/oder kühlbaren Zylinder fördert, Zugabe und Entfernen von Komponenten erlaubt und dabei Misch- und/oder Knetaufgaben durchführt. Der im erfindungsgemäßen Verfahren einzusetzende mindestens eine Extruder wird weiter unten im Zusammenhang mit der erfindungsgemäßen Vorrichtung beschrieben.

Ein Extruder weist üblicherweise verschiedene "Abschnitte" entlang des heiz- und/oder kühlbaren Zylinders auf, der in der Regel eine Förderschnecke enthält. Wenn hierin von einem "Abschnitt des Extruders" die Rede ist, ist damit ein Teilbereich des heiz- und/oder kühlbaren Zylinders des Extruders gemeint, der durch ein bestimmtes prozesstechnisches Merkmal charakterisiert ist. Ein prozesstechnisches Merkmal eines Extruderabschnitts kann beispielsweise sein, dass in diesem Extruderabschnitt auf eine bestimmte Temperatur geheizt oder gekühlt wird, die Zugabe von Komponenten erfolgt, eine Probe entnommen wird und/oder der Leim in diesem Abschnitt eine bestimmte Viskosität aufweist. Wenn hierin von einem "ersten Extruderabschnitt", "zweiten Extruderabschnitt" usw. die Rede ist, ist damit eine Untergliederung des heiz- und/oder kühlbaren Zylinders in gegebenenfalls verschieden große Teilbereiche gemeint, deren Nummerierung entlang des heiz- und/oder kühlbaren Zylinders an dem Ende der Längsachse des heiz- und/oder kühlbaren Zylinder beginnt, an dem die Einspeisung des Harnstoff-Formaldehyd-Leims stattfindet.

Wenn hierin von "reaktiver Extrusion" die Rede ist, sind damit die im Extruder stattfindenden Reaktionen der bereits vorhandenen und gegebenenfalls zugegebenen Leimkomponenten miteinander zu verstehen, insbesondere Kondensationsreaktionen. So können niedermolekulare Methylolharnstoffe bei der reaktiven Extrusion zu komplexeren höhermolekularen aminoplastischen Verbindungen weiterkondensieren. Ferner kann die reaktive Extrusion auch das Einpolymerisieren von Zusatzstoffen mit Amin- oder OH-Gruppen, beispielsweise zugesetztem Ligninsulfonat oder Zuckern, beinhalten. Der Fortgang der reaktiven Extrusion ist u.a. dadurch ersichtlich, dass sich die Viskosität des Leims während der reaktiven Extrusion verändert. Gemäß einer Ausführungsform erhöht sich die Viskosität des Harnstoff-Formaldehyd-Leims während der reaktiven Extrusion zumindest intermediär. "Zumindest intermediär" soll hier bedeuten, dass die Viskosität durch zusätzliche Maßnahmen, z.B. Zugabe von Harnstoff in einem anderen, insbesondere endständigen Abschnitt des Extruders wieder herabgesetzt werden kann.

In jedem Fall sollte bei der reaktiven Extrusion in Schritt b., d.h. zumindest in einem Abschnitt derselben, eine Kondensationsphase enthalten sein. D.h. die reaktive Extrusion beinhaltet mindestens einen Abschnitt, in dem im Harnstoff-Formaldehyd-Leim vorhandene Methylolharnstoffe bei einem sauren pH, vorzugsweise einem pH von 3 bis 6, besonders bevorzugt von 4 bis 5,5 und einer Temperatur von vorzugsweise 70 °C bis 100 °C, besonders bevorzugt von 85 °C bis 95 °C, zu höhermolekularen Kondensationsprodukten weiterreagieren.

In einer Ausführungsform des erfindungsgemäßen Verfahrens werden am Anfang, während und/oder am Ende der reaktiven Extrusion in Schritt b.
- Harnstoff und/oder eine melaminhaltigen Komponente, und
- gegebenenfalls Zusatzstoffe, insbesondere Ligninsulfonat und/oder Zucker hinzugegeben.

Die Zugabe von Harnstoff und/oder einer melaminhaltigen Komponente und gegebenenfalls von weiteren Zusatzstoffen kann im Extruder in einer Art und Weise erfolgen, wie es dem Fachmann aus dem Gebiet der Compoundierung von Kunststoffen mittels Extrudern bekannt ist. Insbesondere ist es möglich, Zusatzstoffe in verschiedenen Zonen des Extruders durch entsprechende Einspeiseöffnungen (z.B. über Hochdruckpumpen) zuzudosieren. Durch die Compoundierung mit Harnstoff und/oder einer melaminhaltigen Komponente und gegebenenfalls weiteren Zusatzstoffen wird aus der in Schritt a. bereitgestellten Mischung umfassend ein Harnstoff-Formaldehyd-Kondensat ein extrudierter Leim mit den bestmöglichen Eigenschaften für den Einsatz in den weiteren Verfahrensschritten c. und d. erzeugt. Insbesondere die optimale Viskosität und das F/U-Verhältnis kann durch diese Zugabe von Harnstoff und/oder einer melaminhaltigen Komponente und der gegebenenfalls einzusetzenden weiteren Zusatzstoffe eingestellt werden. Wenn hierin von einer "melaminhaltigen Komponente" die Rede ist, ist damit eine Zusammensetzung gemeint, die Melamin enthält. In einer bevorzugten Ausführungsform ist die melaminhaltige Komponente ein Melamin-Harnstoff-Formaldehyd-Leim oder ein melaminmodifizierter Harnstoff-Formaldehyd-Leim.

Wenn hierin von "am Anfang der reaktiven Extrusion" die Rede ist, ist damit gemeint, dass die reaktive Extrusion für die bereitgestellte Mischung umfassend ein Harnstoff-Formaldehyd-Kondensat noch nicht oder gerade erst begonnen hat. "Am Anfang" kann insbesondere auch "vor" bedeuten. D.h. am Anfang der reaktiven Extrusion zugegebene Komponenten können auch schon bei der Herstellung der in Schritt a. genannten Mischung hinzugefügt worden sein. Bevorzugt meint "am Anfang" jedoch unmittelbar bevor oder während der reaktiven Extrusion. Üblicherweise entspricht der "Anfang" dem ersten Abschnitt des Extruders, der für die reaktive Extrusion verwendet wird. Dieser erste Abschnitt beinhaltet üblicherweise auch die Einfülleinrichtung für die in Schritt a. bereitgestellte Mischung umfassend ein Harnstoff-Formaldehyd-Kondensat. In einer Ausführungsform erstreckt sich der erste Extruderabschnitt maximal über eine Länge von 1/3 der Gesamtlänge des heiz- und/oder kühlbaren Zylinders des Extruders. "Am Anfang" der reaktiven Extrusion bedeutet dabei insbesondere innerhalb des ersten Drittels des Extruders, bezogen auf die Längsachse des heiz- und/oder kühlbaren Zylinders des Extruders.

Wenn hierin von "während der reaktiven Extrusion in Schritt b." die Rede ist, bedeutet dies, dass die reaktive Extrusion für die Mischung umfassend ein Harnstoff-Formaldehyd-Kondensat bereits begonnen hat. Demnach haben messbare Veränderungen der Mischung, beispielsweise eine Erhöhung der Viskosität, bereits stattgefunden. Gemäß einer Ausführungsform befindet sich die zugehörige Mischung dann auch nicht mehr in dem ersten Extruderabschnitt.

Wenn hierin von "am Ende der reaktiven Extrusion in Schritt b." die Rede ist, ist damit gemeint, dass die reaktive Extrusion schon fast oder vollständig abgeschlossen ist. "Am Ende" kann daher insbesondere auch "nach" bedeuten. Bevorzugt meint "am Ende" jedoch unmittelbar nach oder noch im Endabschnitt des Extruders. Üblicherweise entspricht "am Ende der reaktiven Extrusion" dem letzten Abschnitt des Extruders, der für die reaktive Extrusion verwendet wird. Dieser letzte Abschnitt beinhaltet üblicherweise auch die Austrittsdüse oder -Öffnung für den aus Schritt b. erhaltenen extrudierten Harnstoff-Formaldehyd-Leim. In einer Ausführungsform des erfindungsgemäßen Verfahrens erstreckt sich der letzte Extruderabschnitt maximal über eine Länge von 1/3 der Gesamtlänge des heiz- und/oder kühlbaren Zylinders des Extruders. "Am Ende" der reaktiven Extrusion bedeutet dabei insbesondere innerhalb des letzten Drittels des Extruders, bezogen auf die Längsachse des heiz- und/oder kühlbaren Zylinders des Extruders. "Am Ende" kann aber auch unmittelbar nach dem Austritt aus dem Extruder bedeuten.

Die reaktive Extrusion in Schritt b. findet bei einem pH-Wert von 3 bis 9, bevorzugt von 3 bis 7,5 und insbesondere bevorzugt von 3 bis 6 statt. Gemäß einer Ausführungsform weist die reaktive Extrusion mindestens einen Abschnitt auf, in dem der pH-Wert 3 bis 6, besonders bevorzugt 4,5 bis 5,5 beträgt. Dies hat sich als optimal für eine besonders effiziente Kondensationsreaktion von Methylolharnstoffen in der Mischung umfassend ein Harnstoff-Formaldehyd-Kondensat erwiesen. Der pH kann durch Zugabe von weiter unten näher beschriebenen pH-Regulatoren an geeigneter Stelle im Extruder eingestellt werden.

Die reaktive Extrusion in Schritt b. verläuft mindestens in einem Abschnitt des Extruders, in welchem die Temperatur der im Extruder befindlichen Mischung 30 °C bis 180 °C beträgt, vorzugsweise 40 °C bis 160 °C, besonders bevorzugt 60 °C bis 140 °C, und insbesondere bevorzugt 70 °C bis 130 °C. Dadurch wird, insbesondere in Kombination mit einem sauren pH wie vorstehend angegeben, sichergestellt, dass es zumindest in einem Abschnitt der reaktiven Kondensation zur Bildung hochkondensierter aminoplastischer Strukturen kommt.

Gemäß einer vorteilhaften Ausführungsform der Erfindung weist der extrudierte Leim beim Austritt aus dem Extruder eine Temperatur mindestens 30 °C, insbesondere 35 °C bis 55 °C auf. Dies kann durch entsprechendes Einstellen der Heiztemperatur im Endabschnitt des Extruders sichergestellt werden. Die angegebenen Temperaturbereiche haben den Vorteil, dass der extrudierte Leim eine derart erhöhte Temperatur aufweist, dass er, ohne eine unerwünschte Voraushärtung des Leims zu provozieren, eine ausreichend gute Verteilung, bevorzugt eine gute Versprühbarkeit, auf dem lignocellulosehaltigen Material ermöglicht. Die Anpassung weiterer Reaktionsparameter für die reaktive Extrusion liegen im Wissen und Können des Fachmanns.

In einer bevorzugten Ausführungsform des erfindungsgemäßen Verfahrens wird vor, während und/oder am Ende der reaktiven Extrusion in Schritt b. Harnstoff zugegeben. Der Harnstoff kann als Feststoff oder wässrige Lösung, beispielsweise als 40%-ige Harnstofflösung in Wasser, hinzugegeben werden. Besonders bevorzugt ist die Harnstoffzugabe während oder am Ende der reaktiven Extrusion. Die Harnstoffzugabe hat den Vorteil, dass ein niedriges F/U-Molverhältnis des extrudierten Leims eingestellt werden kann, wodurch letztlich die mit dem extrudierten Leim hergestellten Holzwerkstoffe eine verringerte Formaldehydemission aufweisen. Erfolgt die Harnstoffzugabe erst während oder am Ende der reaktiven Extrusion, kann am Anfang bzw. während der reaktiven Extrusion noch ein für die Kondensation vorteilhafter Überschuss an Formaldehyd vorliegen.

In einer bevorzugten Ausführungsform des erfindungsgemäßen Verfahrens beträgt das Endmolverhältnis von Formaldehyd zu Harnstoff im extrudierten Leim, der aus Schritt b. erhalten wird, 0,75 bis 1,3, bevorzugt 0,85 bis 1,2 und insbesondere bevorzugt 0,9 bis 1,1. Besonders vorteilhaft ist es, wenn das Molverhältnis von Formaldehyd zu Harnstoff während oder zu Beginn der reaktiven Extrusion höher ist als das Endmolverhältnis im extrudierten Leim. Denn für eine besonders effektive und rasche Kondensationsreaktion ist ein hohes F/U-Molverhältnis wichtig, während im finalen Leim, der auf das lignocellulosige Material aufgebracht werden soll, ein möglichst niedriges Verhältnis, im Idealfall nahe oder sogar unter 1, mit Hinblick auf die Verringerung der Formaldehydemissionen im Holzwerkstoff wünschenswert ist. Die Verringerung des F/U-Molverhältnisses kann insbesondere durch eine Zugabe von Harnstoff während oder am Ende der reaktiven Extrusion in Schritt b. erfolgen.

In einer anderen Ausführungsform des erfindungsgemäßen Verfahrens wird am Anfang, während oder am Ende der reaktiven Extrusion in Schritt b. eine melaminhaltige Komponente zugegeben, bevorzugt am Anfang der reaktiven Extrusion. In einer Ausführungsform wird so in Schritt b. ein melaminmodifizierter extrudierter Harnstoff-Formaldehyd-Leim hergestellt, der bis zu 10 Gew.-% Melamin bezogen auf das Gesamtgewicht des extrudierten Leims, enthält. Auch Mengen von 10 Gew.-% bis 25 Gew.-% Melamin, bezogen auf das Gesamtgewicht des extrudierten Leims, haben sich bewährt, wenn eine besonders feste und/oder schnellhärtende Leimfuge gewünscht ist. Die Zugabe einer melaminhaltigen Komponente hat mehrere Vorteile. So zeigte sich zum einen, dass je höher der Gehalt einer melaminhaltigen Komponente ist, desto besser die Wasserbeständigkeit des ausgehärteten Harzes und desto geringer die Feuchteempfindlichkeit der damit hergestellten Holzwerkstoffe. Des Weiteren werden durch die Zugabe einer melaminhaltigen Komponente Verzweigungspunkte in der Aminoplaststruktur ermöglicht, die zu einer dreidimensionalen Vernetzung im ausgehärteten Harz führen. Dies ist vermutlich darauf zurückzuführen, dass je nach Menge an Formaldehyd, sich Mono- bis hin zu Hexa-Hydroxymethylolmelamine bilden. Aufgrund des Melamin-vermittelten höheren dreidimensionalen Vernetzungsgrades des Leims besitzen die damit hergestellten Holzwerkstoffe bessere mechanische Eigenschaften als jene, die mit herkömmlichen Harnstoff-Formaldehyd-Leim hergestellt wurden. Die Melamin-vermittelte dreidimensionale Vernetzung führt auch bei erhöhter Zugabe von Harnstoff zur Emissionsverringerung zu ausreichenden Festigkeiten der damit hergestellten Holzwerkstoffe. Bei Zugabe von Melamin oder Melamin und Harnstoff in Schritt b. ist es zweckmäßiger statt dem F/U-Molverhältnis, das Endmolverhältnis von Formaldehyd zu (NH₂)₂ im extrudierten Leim anzugeben. Werden eine melaminhaltige Komponente oder eine melaminhaltige Komponente und Harnstoff in Schritt b. hinzugegeben, beträgt in einer bevorzugten Ausführungsform des erfindungsgemäßen Verfahrens das Endmolverhältnis von Formaldehyd zu (NH₂)₂ im extrudierten Leim, der aus Schritt b. erhalten wird, 0,6 bis 1,2, bevorzugt 0,7 bis 1,1 und insbesondere bevorzugt 0,8 bis 1,0.

In einer weiteren Ausführungsform des erfindungsgemäßen Verfahrens werden in Schritt b. Harnstoff und eine melaminhaltige Komponente hinzugegeben, bevorzugt am Anfang der reaktiven Extrusion. Dadurch kann einerseits ein niedriges F/U-Molverhältnis des extrudierten Leims eingestellt werden und andererseits der dreidimensionale Vernetzungsgrad erhöht werden. Die mit einem derartigen Leim hergestellten Holzwerkstoffe weisen eine verringerte Formaldehydemission und verbesserte mechanische und hygroskopische Eigenschaften im Vergleich zu Holzwerkstoffen auf, die mit herkömmlichem Harnstoff-Formaldehyd-Leim hergestellt wurden.

In einer weiteren Ausführungsform des erfindungsgemäßen Verfahrens enthält die in Schritt a. bereitgestellte Mischung weitere Zusatzstoffe oder diese werden der Mischung am Anfang, während oder am Ende der reaktiven Extrusion in Schritt b. zugegeben. Die Zusatzstoffe können insbesondere ausgewählt sein aus der Gruppe bestehend aus Gleitmittel, pH-Regulatoren, und Viskositätsregler wie Ligninsulfonat und/oder Zucker. Die Zugabe dieser Zusatzstoffe am Anfang, während oder am Ende der reaktiven Extrusion im Extruder hat den Vorteil, dass durch die mechanische Zwangsmischung im Extruder eine bessere Durchmischung erfolgt, die auch eine verbesserte Verträglichkeit der Zusatzstoffe im extrudierten Leim ermöglicht.

Am Anfang der reaktiven Extrusion werden der Mischung umfassend ein Harnstoff-Formaldehyd-Kondensat bevorzugt Zucker, Ligninsulfonat und/oder pH-Regulatoren zur Absenkung des pH-Wertes zugegeben.

Zusatzstoffe sind hier so definiert, dass sie insgesamt in einer Menge von kleiner als 45 Gew.-%, noch bevorzugter kleiner als 35 Gew.-%, jeweils bezogen auf das Gesamtgewicht des Harnstoff-Formaldehyd-Leims, vorliegen. D.h. die Mischung, welche in Schritt a. eingesetzt wird bzw. der extrudierte Leim, der aus Schritt b. erhalten wird, besteht vorzugsweise zu mindestens 55 Gew.-%, noch bevorzugter zu mindestens 65 Gew.-%, jeweils bezogen auf das Gesamtgewicht der Mischung umfassend ein Harnstoff-Formaldehyd-Kondensat bzw. des extrudierten Leims, aus Wasser, Harnstoff, Formaldehyd und ggf. Melamin.

Die Verwendung eines Gleitmittels als Zusatzstoff hat sich im erfindungsgemäßen Verfahren als vorteilhaft erwiesen, da dieses zur Reduzierung der Wandhaftung beiträgt und damit auch der Belagsbildung im Extruder entgegenwirkt. Für den Einsatz als Gleitmittel sind beispielsweise Wachse als Festwachs oder in Form von Wachsdispersionen geeignet, insbesondere Paraffine und Paraffin-Dispersionen. Es ist insbesondere zweckmäßig als Gleitmittel solche Zusatzstoffe einzusetzen, die auch in dem fertigen Holzwerkstoff als Hydrophobierungsmittel dienen können. Als besonders vorteilhaft hat sich erwiesen, Festwachse zuzusetzen, insbesondere in einer Menge von 0,5 bis 4 Gew.-% bezogen auf das Gesamtgewicht des extrudierten Leims.

Ein Gleitmittel in Form von Wachs wird bevorzugt während der reaktiven Extrusion oder kurz nach dem endgültigen Einstellend des pH-Wertes zugegeben. Dadurch ist sichergestellt, dass das Wachs sich ausreichend gut verteilen kann. Gleichzeitig kann durch eine hohe Extrudertemperatur und die durch den Extruder ermöglichte Scherung eine ausgezeichnete Wachsverteilung erzielt werden. Das Wachs dient im Endprodukt als Quellschutzmittel, sorgt aber auch für eine Herabsetzung des Reibungkoeffizienten an den Extruderwänden und damit für eine Verringerung der Wandbeläge (Fouling) und folglich auch der Wandreibung (Gleitmittel).

Ein weiterer erfindungsgemäß einsetzbarer Zusatzstoff ist ein pH-Regulator. Dies kann im einfachsten Fall eine Säure oder eine Lauge sein. Die Geschwindigkeit und Art der aminoplastischen Kondensationsreaktion lässt sich durch den pH-Wert steuern, wobei ein niedrigerer pH-Wert die Kondensation beschleunigt und ein alkalischer sie verlangsamt oder sogar stoppt. Es hat sich als besonders vorteilhaft erwiesen, latente Säurespender wie beispielsweise Ammoniumsalze von starken Säuren oder schwache Basen wie Amine als pH-Regulatoren einzusetzen. Der Grund dafür ist, dass die langsamere Freisetzung der Säure durch latente Säurespender bzw. die gegenüber anorganischen Basen (beispielsweise Natronlauge) geringere Basenstärke eines Amins es erlauben, die erwünschte pH-Einstellung sehr genau und unter Vermeidung lokaler Überkonzentrationen zu steuern.

Die Zugabe von latenten Säurespendern etwa in Form von Ammoniumsalzen kann zudem auch die Initiierung der Aushärtungsreaktion unterstützen, d.h. die zugegebenen Ammoniumsalze können in vorteilhafter Weise auch als sogenannte Härter bei der in Schritt d. während des Heißverpressens stattfindenden Aushärtung des extrudierten Harnstoff-Formaldehyd-Leims wirken. In einer Ausführungsform wird ein Ammoniumsalz einer anorganischen Säure oder ein Amin als Zusatzstoff eingesetzt.

Als weiterer Zusatzstoff können (modifizierte) Kraft Lignine zugesetzt werden. Diese dienen typischerweise als Füllstoff.

Besonders bevorzugte Zusatzstoffe sind im Rahmen der Erfindung Ligninsulfonat und/oder Zucker. Hochkondensierte Aminoplastharze, wie sie durch die erfindungsgemäße reaktive Extrusion erhalten werden können, neigen zu Phasentrennung bzw. zur Ausbildung sehr hoher Viskositäten. Daher wären Additive, die einerseits als Plastifizierungsmittel und andererseits als Phasenvermittler dienen können, wünschenswert. In einer bevorzugten Ausführungsform der Erfindung enthält die in Schritt a. bereitgestellte Mischung Ligninsulfonat und/oder Zucker oder diese/s werden/wird der Mischung am Anfang, während oder am Ende der reaktiven Extrusion in Schritt b. als Zusatzstoff zugegeben. Besonders bevorzugt ist die Zugabe von Ligninsulfonat und/oder Zucker am Anfang der reaktiven Extrusion. Die Erfindung hat gezeigt, dass beide Stoffe als Phasenvermittler und Viskositätsregler wirken, was im erfindungsgemäßen Verfahren besonders vorteilhaft ist: Bei den mit der reaktiven Extrusion erreichbaren hohen Kondensationsgraden fehlen oftmals die ansonsten phasenvermittelnden niedermolekularen aminoplastischen Strukturen und Methylolharnstoffe. Erfindungsgemäß kann dies zumindest teilweise durch die Zugabe von Phasenvermittlern, wie Ligninsulfonat und/oder Zuckern kompensiert werden. Unmodifizierte Kraft Lignine gehören nicht zu den erfindungsgemäß als Phasenvermittler und Viskositätsregler eingesetzten Ligninsulfonaten.

Ligninsulfonat wird üblicherweise im Sulfitverfahren durch Sulfonierung von Lignin und dessen Überführung in wasserlösliches Ligninsulfonat gewonnen. Chemisch gesehen ist Ligninsulfonat ein wasserlösliches Polyphenol. Das erfindungsgemäß einzusetzende Ligninsulfonat kann als Salz, insbesondere in Form von Calcium-, Magnesium-, Ammonium- und/oder Natrium-Ligninsulfonat vorliegen. Das Ligninsulfonat kann eine sehr breite Molmassenverteilung von 1000 bis 140000 g/mol aufweisen. Die mittlere molare Masse des Ligninsulfonats ist abhängig von dem zur Herstellung eingesetzten Holz (Nadelholz, Laubholz) und vom Herstellungsprozess selbst.

Das Ligninsulfonat kann in Form einer kommerziell erhältlichen wässrigen Ligninsulfonatzusammensetzung eingesetzt werden. Diese enthalten meist aufgrund ihrer Entstehung im Sulfitprozess einen Feststoffanteil an Ligninsulfonat von etwa 30 bis 50 Gew.-% in wässriger Lösung. In dem erfindungsgemäßen Verfahren können jedoch auch verdünntere oder konzentriertere Ligninsulfonatzubereitungen oder Ligninsulfonat als Feststoff eingesetzt werden. Bevorzugt wird das Ligninsulfonat in Form einer wässrigen Zusammensetzung, insbesondere einer wässrigen Suspension eingesetzt. Dies hat zum einen den Vorteil, dass das Ligninsulfonat direkt so eingesetzt werden kann, wie es im Sulfitprozess anfällt. Zweckmäßig ist insbesondere, wenn der Zusatzstoff Ligninsulfonat in Schritt b. in einer Menge von 0,1 bis 30 Gew.-%, bevorzugt von 0,2 bis 20 Gew.-% und insbesondere bevorzugt von 0,5 bis 10 Gew.-%, jeweils als Feststoffgewicht bezogen auf das Gesamtgewicht des extrudierten Leims, zugegeben wird. Der pH-Wert des eingesetzten Ligninsulfonats kann in weiten Bereichen variieren, je nach Art des Sulfitverfahrens, aus dem es stammt. So ist ein pH-Wert von 1 bis 13 möglich.

In einer Ausführungsform des erfindungsgemäßen Verfahrens handelt es sich bei dem Ligninsulfonat um Calcium-Ligninsulfonat. In einer anderen Ausführungsform des erfindungsgemäßen Verfahrens handelt es sich bei dem Ligninsulfonat um Magnesium-Ligninsulfonat. In einer weiteren Ausführungsform des erfindungsgemäßen Verfahrens handelt es sich bei dem Ligninsulfonat um Ammonium-Ligninsulfonat. Es können auch Mischungen dieser drei Ligninsulfonat-Typen eingesetzt werden.

Überraschend hat sich gezeigt, dass Ligninsulfonat bei der reaktiven Extrusion in Schritt b. als Phasenvermittler und/oder Viskositätsregler wirkt. Das Ligninsulfonat wird hierin daher auch als erfindungsgemäßer Phasenvermittler bzw. erfindungsgemäßer Viskositätsregler bezeichnet. Die Erfindung betrifft in diesem Sinne auch die Verwendung von Ligninsulfonat als Phasenvermittler und/oder Viskositätsregler in der reaktiven Extrusion einer Mischung umfassend ein Harnstoff-Formaldehyd-Kondensat für Holzwerkstoffe.

Ein "Phasenvermittler" im Sinne der Erfindung bewirkt, dass mindestens zwei nicht oder schlecht miteinander mischbare Phasen zu einem feinverteilteren Gemisch (einer Dispersion) vermengt und stabilisiert werden. Das erfindungsgemäß eingesetzte Ligninsulfonat "stabilisiert" und dispergiert dabei insbesondere die während der reaktiven Extrusion erzeugten hochmolekularen Polymethylenharnstoffmoleküle in der wässrigen Phase.

Ein "Viskositätsregler" im Sinne der Erfindung hat Einfluss auf die herrschende Viskosität, d.h. durch dessen Zugabe kann die Viskosität verändert werden.

Ohne an eine bestimmte wissenschaftliche Theorie gebunden sein zu wollen, scheint die phasenvermittelnde Wirkung des Ligninsulfonats darauf zu beruhen, dass dieses zumindest teilweise über die Sulfonat- oder freie OH-Gruppen mit anderen Leimkomponenten, insbesondere mit Formaldehyd, Harnstoff und/oder vorhandenen Kondensationsprodukten des Leims wechselwirkt. Derart mit Ligninsulfonat modifizierte Kondensationsprodukte, insbesondere mit Ligninsulfonat modifizierte hochmolekulare Kondensationsprodukte des Harnstoff-Formaldehyd-Leims in Form von Polymethylenharnstoff sind besser mit der wässrigen Phase mischbar. Sie wirken als Phasenvermittler, indem sie sich an der Phasengrenzfläche so ausrichten, dass der wasserlösliche Ligninsulfonat-Teil in die wässrige Phase hineinragt, während das hydrophobere Harnstoff-Formaldehyd-Kondensationsprodukt in die hydrophobe Phase hineinragt, wodurch es zu einer molekularen Kopplung und damit Verträglichkeitsvermittlung der beiden Phasen in der Dispersion kommt. Dies geht bis hin zur - zumindest augenscheinlichen - Einphasigkeit. Die erfindungsgemäße Wirkung setzt bereits bei einer Menge von 0,1 Gew.-% Ligninsulfonat (Feststoffgewicht bezogen auf das Gesamtgewicht des extrudierten Leims) ein.

Außerdem wirkt Ligninsulfonat als Viskositätsregler. Durch die Zugabe von Ligninsulfonat kann die Viskosität des extrudierten Leims herabgesetzt werden. Dies ist vermutlich auf die phasenvermittelnden Eigenschaften des Ligninsulfonats zurückzuführen.

Wie für Ligninsulfonat hat sich überraschend auch für die Verwendung von Zucker, bevorzugt Fructose, gezeigt, dass diese bei der reaktiven Extrusion in Schritt b. als Phasenvermittler und/oder Viskositätsregler wirken. Auch Zucker werden hier daher als erfindungsgemäße Phasenvermittler bzw. erfindungsgemäße Viskositätsregler bezeichnet. Es bilden sich mit Zuckern ähnliche Phasenvermittlermoleküle in situ während der reaktiven Extrusion wie vorstehend für Ligninsulfonat beschrieben. Die Erfindung betrifft demnach auch die Verwendung von Zucker und/oder niedermolekularen Polyolen als Phasenvermittler und/oder Viskositätsregler in der reaktiven Extrusion einer Mischung umfassend ein Harnstoff-Formaldehyd-Kondensat für Holzwerkstoffe.

Bevorzugt enthält die in Schritt a. eingesetzte Mischung umfassend ein Harnstoff-Formaldehyd-Kondensat einen Zucker in einer Menge von 1 bis 40 Gew.-%, bevorzugt von 2 bis 25 Gew.-% und insbesondere bevorzugt von 5 bis 15 Gew.-%, jeweils als Feststoffgewicht bezogen auf das Gesamtgewicht des extrudierten Leims, oder der Zucker wird am Anfang, während oder am Ende der reaktiven Extrusion in Schritt b. in dieser Menge zugegeben.

Ohne an eine bestimmte wissenschaftliche Theorie gebunden sein zu wollen, scheint auch die phasenvermittelnde Wirkung der Zucker darauf zu beruhen, dass diese teilweise über freie OH-Gruppen mit anderen Leimkomponenten, insbesondere mit Formaldehyd, Harnstoff und/oder hochmolekularen Kondensationsprodukten des Leims reagieren. Dadurch werden insbesondere während der reaktiven Extrusion erzeugte hochmolekulare Kondensationsprodukte des extrudierten Harnstoff-Formaldehyd-Leims mit der wässrigen Phase kompatibilisiert. Die erfindungsgemäße Wirkung setzt bereits bei einer Menge von 1 Gew.-% Zucker (Feststoffgewicht bezogen auf das Gesamtgewicht des extrudierten Leims) ein.

Die Zucker wirken außerdem als Viskositätsregler. Diese Funktionalität ist vermutlich genauso wie bei Ligninsulfonat auf die phasenvermittelnde Wirkung der Zucker zurückzuführen. Durch die Zugabe von Zucker kann die Viskosität des extrudierten Leims somit erniedrigt werden

In einer weiteren Ausführungsform des erfindungsgemäßen Verfahrens ist der Zucker ausgewählt aus der Gruppe bestehend aus Aldosen und Ketosen. Der eingesetzte Zucker kann insbesondere ein Monosaccharid, ein Dissaccharid oder ein Polysaccharid sein. In einer anderen Ausführungsform des erfindungsgemäßen Verfahrens ist der Zucker ein reduzierender Zucker. Wenn hierin von "reduzierendem Zucker" die Rede ist, wird darunter ein Zucker verstanden, der eine Aldehyd- oder Ketogruppe enthält oder so isomerisieren kann, so dass zum angestrebten Zeitpunkt in der betreffenden Extruderzone eine Aldehyd- oder Ketogruppe vorliegt. Ein derartiger Zucker kann somit quasi als teilweiser Formaldehydersatz wirken und ermöglicht so die weitere Absenkung des Formaldehydgehalts im Leim. Geeignete Zucker sind insbesondere ausgewählt aus Fructose, Glucose, Saccharose und Maltodextrin. Besonders bevorzugt ist Fructose.

Des Weiteren ist der Einsatz von Zucker und/oder Ligninsulfonat deswegen besonders zweckmäßig, weil diese beiden Zusatzstoffe bei der reaktiven Extrusion, besonders aber im Zuge der Aushärtung, in die Harzmatrix miteingebunden werden können und so zu einem erhöhten Vernetzungsgrad des Bindemittelgemisches auf Basis des extrudierten Formaldehyd-Harnstoff-Harzes mit niedrigem F/U-Molverhältnis beitragen. Dadurch können die mechanischen und hygroskopischen Eigenschaften von Holzwerkstoffen, die mit einem derartigen Leim hergestellt werden, verbessert werden.

Außerdem können weitere Zusatzstoffe wie Hydrophobierungsmittel, Plastifizierungsmittel, Vernetzungsmittel, Beschleuniger (beispielsweise PMDI, Amine), Brandschutzmittel, Pilzschutzmittel, Insektizide, Netzmittel, Farben, Leitfähigkeitsmittel, Füllstoffe und/oder Verstärkungsstoffe am Anfang, während oder am Ende der reaktiven Extrusion in Schritt b. zugeführt werden.

Farben, Brandschutzmittel, Insektizite, Fungizide werden bevorzugt erst am Ende der reaktiven Extrusion zugegeben. Dies hat den Vorteil, dass die Wirksamkeit dieser Zusatzstoffe nicht durch die erhöhte Temperatur während der reaktiven Extrusion beeinträchtigt wird.

Des Weiteren kann die Vernetzung des extrudierten Leims durch Zugabe von polymerem Diphenylmethandiisocyanat (PDMI) und/oder Aminen, latenten Härtern, organischen (Poly)säuren oder anderen Vernetzungsmitteln unterstützt werden. Die Zumischung dieser Zusatzstoffe erfolgt bevorzugt vor der Auftragung der Leimflotte auf das lignocellulosehaltige Material.

Der reaktiven Extrusion der Mischung aus Schritt a. in mindestens einem Extruder wird jedoch kein lignocellulosehaltiges Material zugeführt. Der extrudierte Leim, der aus Schritt b. erhalten wird umfasst somit kein lignocellulosehaltiges Material.

Gemäß einer weiteren Ausführungsform des erfindungsgemäßen Verfahrens wird für die reaktive Extrusion in Schritt b. mehr als ein Extruder oder ein Extruder mit unterschiedlichen Abschnitten verwendet, die sich in ihrer Art und Funktionsweise bzw. den eingestellten Parametern unterscheiden. Die Verwendung mehrerer Extruder oder unterschiedlicher Extruderabschnitte hat den Vorteil, dass verschiedenartige Extruder, insbesondere Extruder, die sich in der Art und Funktionsweise des heiz- und/oder kühlbaren Zylinders unterscheiden, eingesetzt werden können und/oder die gleichen Extruder in Serie unterschiedlich betrieben werden können. Beispielsweise können unterschiedliche Drehzahlen der Förderschnecke zur Anwendung kommen und/oder der Zylinder mit der Förderschnecke wird unterschiedlich beheizt oder gekühlt. So kann z.B. in einem kontinuierlichen Verfahren sowohl eine Vorkondensation, eine Nachkondensation und ggf. weitere Phasen, wie Modifizierung oder Compoundierung mit Zusatzstoffen, Reifung und/oder Abkühlung in einem kontinuierlichen Verfahren durchgeführt werden.

Das Produkt der reaktiven Extrusion in Schritt b. ist der extrudierte Leim. Dieser ist eine wässrige Dispersion. In einer Ausführungsform handelt es sich dabei um eine fein dispergierte wässrige Dispersion, was aufgrund der hervorragenden Mischleistung des Extruders regelmäßig möglich ist.

Gemäß einer Ausführungsform kann der extrudierte Leim so instabil sein, dass dieser unmittelbar nach dem Aufbringen auf das lignocellulosehaltige Material bricht. Wenn hier von "Brechen" die Rede ist, ist damit gemeint, dass eine Phasentrennung des extrudierten Leims eintritt. Der extrudierte Leim kann somit unmittelbar nach dem Aufbringen auf das lignocelluosehaltige Material in eine gebrochene Dispersion übergehen. Eine "gebrochene Dispersion" stellt keine homogene Dispersion mehr dar. Dies kann eine Folge der mit der reaktiven Extrusion erzielbaren hohen Kondensationsgrade sein, denn hochkondensierte Aminoplastharze neigen zu Phasentrennung. Im Gegensatz zur konventionellen Leimherstellung ist die Herstellung eines derart instabilen extrudierten Leims im erfindungsgemäßen Verfahren nicht unbedingt schädlich, da der extrudierte Leim in Schritt c. direkt auf das lignocellulosehaltige Material aufgebracht wird. Insbesondere kann hier in besonders vorteilhafter Weise eine Verbindung zwischen dem Extruder in Schritt b. und der Leimapplikationsvorrichtung in Schritt c. bestehen, so dass keine Zwischenlagerung notwendig ist. Der durch die Extrusion aufgebaute Druck kann direkt zum Aufbringen des extrudierten Leims genutzt werden. Das Aufbringen eines instabilen Leims auf das lignocellulosehaltige Material, d.h. eines Leims, der unmittelbar nach dem Auftragen in eine gebrochene Dispersion übergeht, kann überraschenderweise in vielen Anwendungsfällen sogar vorteilhaft sein, da es dann unmittelbar auf dem lignocellulosehaltigen Material zu einer Phasentrennung kommt. Dadurch verbleibt mehr Bindemittel an der Oberfläche des lignocellulosehaltigen Materials und "schlägt nicht weg".

Im Gegensatz zu der aus dem Stand der Technik bekannten Extrusion zu Formkörpern bei aktiver Entgasung ist Ziel der erfindungsgemäßen reaktiven Extrusion einen für die Auftragung durch eine Leimapplikationseinrichtung geeigneten, bevorzugt sprühfähigen, extrudierten Leim zu erhalten. Hierfür ist ein entsprechend hoher Wasseranteil im extrudierten Leim und in der Leimflotte wichtig, weswegen eine Entgasung während der Extrusion nicht notwendig und im erfindungsgemäßen Verfahren im Einzelfall sogar nachteilig sein kann. So findet gemäß einer Ausführungsform während der reaktiven Extrusion in Schritt b. keine Entgasung statt.

In einer Ausführungsform des erfindungsgemäßen Verfahrens besitzt der in Schritt b. erhaltene extrudierte Leim einen Wassergehalt von 25 bis 60 Gew.%, bevorzugt von 30 bis 50 Gew.% und insbesondere bevorzugt von 32 bis 45 Gew.% bezogen auf das Gesamtgewicht des Leims.

Der Gehalt an freiem Formaldehyd des erfindungsgemäß hergestellten extrudierten Leimes ist kleiner als 0,1 Gew.- %, bevorzugt kleiner als 0,07 Gew.- % und besonders bevorzugt kleiner als 0,05 Gew.- % bezogen auf das Gesamtgewicht des extrudierten Leims. Methoden zur Bestimmung des Gehalts an freiem Formaldehyd in einem Leim sind dem Fachmann bekannt. Die Bestimmung kann beispielsweise durch Titration erfolgen.

Während der reaktiven Extrusion durchläuft die eingesetzte Mischung eine Veränderung ihrer Eigenschaften, insbesondere ihrer Viskosität. In einer Ausführungsform des erfindungsgemäßen Verfahrens wird während der reaktiven Extrusion in Schritt b. die Viskosität der eingesetzten Mischung erhöht, wobei die reaktive Extrusion so durchgeführt wird, dass im Extruder eine intermediäre Viskosität des Leims von 500 bis 100000 mPa·s, bevorzugt von 1000 bis 50000 mPa·s und insbesondere bevorzugt von 1500 bis 10000 mPa·s, jeweils gemessen bei 20 °C und einem Schergefälle von D=200 1/s, erreicht wird. Diese kann nachgewiesen werden, indem eine Probe aus einem entsprechenden Extruderabschnitt entnommen wird und einer weiter oben erläuterten, dem Fachmann bekannten Methode zur Viskositätsbestimmung unterworfen wird. Die Probenentnahme kann über zur Dosierung oder Entgasung vorgesehene Öffnungen im Extruder geschehen.

In einer weiteren Ausführungsform des erfindungsgemäßen Verfahrens wird die reaktive Extrusion in Schritt b. so durchgeführt, dass der extrudierte Leim eine Endviskosität von 100 bis 3000 mPa·s, bevorzugt von 200 bis 2500 mPa·s und insbesondere bevorzugt von 300 bis 2000 mPa·s, jeweils gemessen bei 20 °C und einem Schergefälle von D=200 1/s, aufweist. Diese Endviskositäten des extrudierten Leims sind besonders zweckmäßig, da dann der extrudierte Leim für Verfahrensschritt c. besonders tauglich ist, d.h. gebrauchsfertig ist für das Aufbringen auf lignocellulosehaltiges Material mittels einer Leimapplikationseinrichtung, bevorzugt durch Aufsprühen.

In einer weiteren Ausführungsform der Erfindung wird während der reaktiven Extrusion in Schritt b. die Viskosität der eingesetzten Mischung erhöht, wobei die reaktive Extrusion so durchgeführt wird, dass im Extruder eine intermediäre Viskosität der eingesetzten Mischung von 200 bis 100000 mPa·s, bevorzugt von 300 bis 50000 mPa·s und insbesondere bevorzugt von 400 bis 10000 mPa·s, jeweils gemessen bei 20 °C und einem Schergefälle von D=200 1/s nach EN ISO 3219, erreicht wird. Nach dem Erreichen dieser Viskositäten kann die Viskosität der eingesetzten Mischung durch Zugabe von viskositätserniedrigenden Stoffen, insbesondere Harnstoff, Ligninsulfonaten und/oder Zucker wieder erniedrigt werden, so dass der extrudierte Leim eine Endviskosität von 100 bis 3000 mPa·s, bevorzugt von 200 bis 2000 mPa·s und insbesondere bevorzugt von 300 bis 1500 mPa·s, jeweils gemessen bei 20 °C und einem Schergefälle von D=200 1/s, aufweist. Die Harnstoff-, Ligninsulfonat und/oder Zuckerzugabe kann in diesem Zusammenhang insbesondere noch im Extruder erfolgen. So ist eine optimale Durchmischung gewährleistet und der aus dem Extruder austretende extrudierte Leim ist von der Viskosität her direkt zur Auftragung durch eine Leimapplikationseinrichtung geeignet. So kann er, wenn gewünscht, unmittelbar nach Schritt b. direkt in Schritt c. des erfindungsgemäßen Verfahrens eingesetzt werden. In einer bevorzugten Ausführungsform ist der extrudierte Leim sprühfähig.

Durch die Kombination einer intermediären Erhöhung des Kondensationsgrades der eingesetzten Mischung mittels reaktiver Extrusion und anschließender Verringerung der Viskosität durch Harnstoff-, Ligninsulfonat- und/oder Zuckerzugabe am Ende der reaktiven Extrusion erlaubt es die Erfindung in besonders vorteilhafter Weise, Harnstoff-Formaldehyd-Leime mit herabgesetztem F/U-Molverhältnis zu erzeugen, die trotzdem noch eine optimale Viskosität des Leimes aufweisen und sicherheits- oder verfahrenstechnische Risiken minimieren.

In einer besonders bevorzugten Ausführungsform wird die Mischung aus Schritt a. auf ein Endmolverhältnis von Formaldehyd zu (NH₂)₂ in Höhe von 0,9 bis 1,1 eingestellt. Diese Mischung wird dann nach Zumischen von Ligninsulfonat und/oder Zucker in Schritt b. so weit kondensiert, dass im Extruder eine intermediäre Viskosität der eingesetzten Mischung von 200 bis 5000 mPa·s, bevorzugt von 300 bis 3000 mPa·s und insbesondere bevorzugt von 400 bis 2500 mPa·s, jeweils gemessen bei 20 °C und einem Schergefälle von D=200 1/s nach EN ISO 3219, erreicht wird. Mit Hilfe dieser intermediären Viskositäten während der reaktiven Extrusion ist nur noch eine eher geringfügige Anpassung der Viskosität an die gewünschte Endviskosität des extrudierten Leims vonnöten.

### Schritt c.

Das erfindungsgemäße Verfahren umfasst als Schritt c. die Beleimung von lignocellulosehaltigem Material durch Aufbringen einer Leimflotte enthaltend oder bestehend aus dem extrudierten Leim, der in Schritt b. erhalten wird, auf das lignocellulosehaltige Material, wobei das Aufbringen mittels einer Leimapplikationseinrichtung erfolgt.

Wenn hier von "lignocellulosehaltigem Material" die Rede ist, ist damit pflanzliches Material gemeint, das Lignocellulose enthält. Lignocellulose im Sinne der Erfindung enthält Cellulose und/oder Hemicellulose sowie Lignin. In einer bevorzugten Ausführungsform enthält das lignocellulosehaltige Material Holzpartikel oder besteht daraus. Sowohl die Holzpartikel als auch das lignocellulosehaltige Material als solches können insbesondere ausgewählt sein aus feinteiligem Holz, Holzfasern, Holzflakes, Holzstrands, Holzwafer, Holzspänen und Hackschnitzeln. Holzspäne, Holzfasern und Holzstrands sind in besonderem Maße für das erfindungsgemäße Verfahren geeignet.

Typischerweise wird der extrudierte Leim bzw. die Leimflotte in Schritt c. auf das lignocellulosehaltige Material aufgebracht bevor, während und/oder nachdem dieses zu einer Matte gestreut worden ist. Aufbringen des Leims und Beleimung wird hier synonym verwendet. Beleimen ist das ganze oder teilweise Benetzen des lignocellulosehaltigen Materials mit dem extrudierten Leim bzw. der Leimflotte. Der aus Schritt b. erhaltene extrudierte Leim kann direkt als "Leimflotte" in Schritt c. eingesetzt werden. D.h. falls zusätzliche Komponenten in der Leimflotte gewünscht sind, können diese direkt vor, während oder nach der reaktiven Extrusion in Schritt b. hinzugefügt werden, insbesondere im Extruder, was eine gute Durchmischung sicherstellt. Die in Schritt c. eingesetzte Leimflotte kann somit mit dem aus Schritt b. erhaltenen extrudierten Leim identisch sein. Es können zwischen den Schritten b. und c. aber auch noch weitere Verfahrensschritte stattfinden, insbesondere ein Abmischen oder Hinzufügen weiterer Komponenten zur Herstellung einer Leimflotte aus dem aus Schritt b. erhaltenen extrudierten Leim. Typischerweise besteht die Leimflotte zu mindestens 50 Gew.-%, vorzugsweise mindestens 60 Gew.-% und besonders bevorzugt zu mindestens 70 Gew.-% aus dem aus Schritt b. erhaltenen extrudierten Leim. Die oben gemachten Angaben zu bevorzugten Ausführungsformen und Eigenschaften des extrudierten Leims gelten daher identisch und in unabhängiger Weise auch für die Leimflotte und werden hier lediglich der Kürze wegen nicht noch einmal in unabhängiger Weise wiederholt.

Die Viskosität der Leimflotte ist von entscheidender Bedeutung für die Qualität der Beleimung. Ist die Viskosität der Leimflotte zu niedrig, dringt ein zu großer Anteil des Leims in das lignocellulosehaltige Material ein, d.h. es kommt zu einem "Wegschlagen" in das lignocellulosehaltige Material, sodass zu wenig Leim in der eigentlichen Leimfuge verbleibt. Dadurch kann sich keine wirkliche Leimfuge und damit auch keine ausreichende Bindefestigkeit des Holzwerkstoffs ausbilden. Ist die Viskosität der Leimflotte zu hoch, ist die Leimverteilung beeinträchtigt und es erfolgt möglicherweise keine ausreichende Benetzung sowie kein oder ein zu geringes Eindringen des Leimes in das lignocellulosehaltige Material, wodurch keine ausreichende mechanische Verankerung des Holzwerkstoffs erreicht wird. Besonders praxisgerechte Ergebnisse stellen sich ein, wenn die Viskosität der Leimflotte in Schritt c. von 100 bis 3000 mPa·s, bevorzugt von 200 bis 2500 mPa·s und insbesondere bevorzugt von 300 bis 1500 mPa·s, jeweils gemessen bei 20 °C und einem Schergefälle von D=200 1/s, beträgt.

Ein Vorteil des erfindungsgemäßen Verfahrens ist, dass sich diese Viskositäten vorteilhafterweise schon während der reaktiven Extrusion in Schritt b. einstellen lassen, insbesondere selbst dann, wenn zur Herabsetzung des F/U-Molverhältnisses im extrudierten Leim eine Harnstoffzugabe vor oder nach Abschluss der Extrusion erfolgt.

Schritt c. des erfindungsgemäßen Verfahrens kann neben der ggf. zu erfolgenden Herstellung der Leimflotte aus dem extrudierten Leim weitere Schritte umfassen, z.B. typischerweise die Dosierung der Leimflotte, die Dosierung des zu beleimenden lignocellulosehaltigen Materials sowie die Streuung des beleimten lignocellulosehaltigen Materials zu einer Matte, die dann in Schritt d. zum Holzwerkstoff verpresst wird.

Der Beleimungsgrad in Schritt c. beträgt, in Abhängigkeit von dem Holzwerkstoff, der hergestellt werden soll, bevorzugt von 7 bis 14 Gew.-% Festharz auf atro lignocellulosehaltiges Material. "Atro lignocellulosehaltiges Material", wie hierin verwendet, bezieht sich auf das Gewicht von darrtrockenem lignocellulosehaltigem Material, welches praktisch wasserfrei ist. Der darrtrockene Zustand des lignocellulosehaltigen Materials kann beispielsweise durch Lagerung bei einer Temperatur von 103 °C +/- 2 °C bis zur Gewichtskonstanz bzw. Massekonstanz erzielt werden. Festharz bedeutet die Summe der Feststoffanteile von Harnstoff, Formaldehyd, Additiven und ggf. Melamin, falls im Leim vorhanden.

Der Auftrag der Leimflotte auf das lignocellulosehaltige Material erfolgt mit einer Leimapplikationseinrichtung. Die Leimapplikationseinrichtung kann ausgewählt sein aus der Gruppe bestehend aus einer oder mehreren Sprühdüsen, insbesondere Flüssigkeits-Druckdüsen, Flüssigkeit-Luft-Zerstäuberdüsen, oder Flüssigkeits-Dampfzerstäuberdüsen, einer Blow-Line-Beleimungseinrichtung, einer Fallschacht-Beleimungseinrichtung, und/oder einem mechanischen Beleimungsmischer, insbesondere einer Trommelbeleimungsanlage, die ggf. einen oder mehrere Atomizer aufweist. Teil der Leimapplikationseinrichtung kann neben den Sprühdüsen auch ein Mischer sein, der den Sprühdüsen vorgeschaltet ist und für eine Durchmischung des extrudierten Leims bis zum Versprühen sorgt und auch zum Einmischen weiterer Zusatzstoffe kurz vor der Leimapplikation dienen kann.

In einer bevorzugten Ausführungsform ist die Leimapplikationseinrichtung eine Blow-Line-Beleimungseinrichtung. Deren Prinzip besteht darin, dass der Leim in einem Strom aus lignocellulosehaltigem Material eingedüst wird, welcher sich mit hoher Geschwindigkeit bewegt (150 bis 500 m/s). Wegen der hohen Turbulenzen in der Leitung kommt es zu einer gleichmäßigen Leimverteilung. In der Blowline können neben der Leimflotte auch beispielsweise noch Oberflächen-modifizierende Agenzien aufgesprüht werden, welche die Oberfläche des lignocellulosehaltige Materials neutralisieren und/oder verkapseln können.

Das Beleimen des lignocellulosehaltigen Materials kann aber auch durch Aufsprühen in einem Fallschacht oder auf einem Fließband mittels Sprühdüsen, insbesondere Flüssigkeits-Druckdüsen, Flüssigkeit-Luft-Zerstäuberdüsen oder Flüssigkeits-Dampfzerstäuberdüsen, erfolgen.

Gemäß einer anderen Ausführungsform des erfindungsgemäßen Verfahrens kann die Leimapplikationseinrichtung auch ein mechanischer Beleimungsmischer sein.

In einer weiteren Ausführungsform ist die Applikationseinrichtung eine Trommelbeleimunganlage, die ggf. einen oder mehrere Atomizer aufweist.

In einer weiteren Ausführungsform des erfindungsgemäßen Verfahrens kann zwischen Schritt b. und c. mindestens ein weiterer Zwischenschritt erfolgen. Gemäß einer bevorzugten Ausführungsform erfolgen zumindest die Schritte b. und c. und die ggf. dazwischenliegende Schritte kontinuierlich, d.h. eine Zwischenlagerung des extrudierten Leims ist in dieser Ausführungsform ausgeschlossen. Vorzugsweise besteht eine physische Verbindung zwischen dem Austritt des extrudierten Leims aus dem Extruder und der Leimapplikationseinrichtung, so dass der extrudierte Leim durch Ausnutzung des im Extruder aufgebauten Drucks dorthin gefördert werden kann.

### Schritt d.

Schließlich umfasst das erfindungsgemäße Verfahren als Schritt d. das Verpressen des beleimten lignocellulosehaltigen Materials aus Schritt c. unter Druck- und Temperatureinwirkung zu einem Holzwerkstoff.

Grundsätzlich sind dem Fachmann verschiedene Methoden bekannt, um Holzwerkstoffe durch Verpressen herzustellen. Vorzugsweise handelt es sich bei Schritt d. um eine Heißverpressung. Optimale Ergebnisse können erzielt werden, wenn der Pressfaktor beim Heißpressen 2 bis 10 s/mm, bevorzugt 3 bis 6 s/mm beträgt. Unter Pressfaktor wird hier insbesondere die Verweilzeit des Holzwerkstoffs in der Presse in Sekunden je Millimeter Dicke des fertigen gepressten Holzwerkstoffs verstanden.

Geeignete Temperaturen für das Verpressen in Schritt d. des erfindungsgemäßen Verfahrens oder einer seiner Ausführungsformen sind Temperaturen von 150 °C bis 250 °C, bevorzugt von 160 °C bis 240 °C, insbesondere bevorzugt von 180 °C bis 230 °C. Bei Temperaturen in diesen Bereichen kann das Verfahren besonders wirtschaftlich durchgeführt werden.

Aus ökonomischen und verfahrenstechnischen Gründen hat es sich als vorteilhaft erwiesen, wenn beim Verpressen ein spezifischer Pressdruck (aktiver Druck auf der Plattenoberfläche) von 50 bis 300 N/cm², verwendet wird. Derartige Drücke stellen eine besonders gute Verklebung der lignocellulosehaltigen Partikel miteinander sicher. Zudem kann mit einem solchen Pressdruck eine hohe Festigkeit der Holzwerkstoffe erreicht werden.

### Vorrichtung

Die erfindungsgemäße Vorrichtung umfasst
i. einen Extruder,
ii. eine an den Extruder angeschlossene Leimapplikationseinrichtung, und
iii. eine Einrichtung zum Verpressen von lignocellulosehaltigem Material zu einem Holzwerkstoff.

Sie ist zur Durchführung des erfindungsgemäßen Verfahrens geeignet.

Die nachfolgende genauere Beschreibung dieser Komponenten gilt auch für das vorstehend beschriebene erfindungsgemäße Verfahren, in welchem diese Komponenten eingesetzt werden.

Der erfindungsgemäße Extruder (i) ist ein Aufbereitungsextruder, welcher der chemischen Aufbereitung der eingesetzten Mischung mit Hilfe zumindest der Verfahrensoperationen Fördern, Heizen, Mischen und Ausstoßen dient. Zusätzlich können noch Entgasen und/oder Druckaufbau als weitere Verfahrensoperationen vorhanden sein bzw. praktiziert werden. Gemäß einer Ausführungsform findet in dem Extruder keine Entgasung statt. Im Gegensatz zu der aus dem Stand der Technik bekannten Extrusion zu Formkörpern bei aktiver Entgasung ist Ziel der erfindungsgemäßen Extrusion einen Harnstoff-Formaldehyd-Leim zu erhalten, der zur Auftragung durch eine Leimapplikationseinrichtung geeignet ist, bevorzugt durch Aufsprühen mittels einer Leimapplikationseinrichtung. Hierfür ist ein entsprechend hoher Wasseranteil im extrudierten Leim und in der Leimflotte wichtig, weswegen eine Entgasung während der Extrusion nicht notwendig und im erfindungsgemäßen Verfahren im Einzelfall sogar nachteilig sein kann.

Der Extruder (i) umfasst grundsätzlich drei Hauptbereiche: den Antriebsteil, den Verfahrensteil und den Austragsteil. Diese Hauptbereiche lassen sich wiederum in Baugruppen untergliedern, die aus Bauteilen zusammengesetzt sind. Mit Hilfe des Antriebsteils, welcher einen Motor und ein Getriebe umfasst, wird die Antriebsenergie in mechanische Energie umgewandelt, um von den Schnecken- und Knetelementen im Verfahrensteil auf das zu verarbeitende Produkt übertragen zu werden. Im Verfahrensteil des Extruders werden unterschiedliche Verfahrensabschnitte entsprechend den jeweiligen Erfordernissen für die reaktive Extrusion gestaltet und miteinander kombiniert. Im Wesentlichen sind dies der Einzugsabschnitt, der Aufschmelz- bzw. Heizabschnitt, der Misch- und Homogenisierungsabschnitt, ggf. der Entgasungsabschnitt und/oder der Austrags- bzw. Druckaufbauabschnitt. Am Ende des Verfahrensteils erfolgt die Übergabe des fertigen Produkts, d.h. des extrudierten Leims, an den Austragsteil. Der Austragsteil umfasst alle im Anschluss an den Verfahrensteil eingebauten Bauteile, durch die das fertige Produkt strömt und dem nächsten Verfahrensschritt zugänglich gemacht wird. Austragsteile können beispielsweise Adapterstücke, Drosselventile und Siebvorrichtungen umfassen. Bei der erfindungsgemäßen Vorrichtung besteht eine Verbindung zwischen dem Austragsteil des Extruders mit der Leimapplikationseinrichtung (ii), so dass der extrudierte Leim in die Leimapplikationseinrichtung fließen kann. Zwischen dem Extruder (i) und der Leimapplikationseinrichtung (ii) können weitere Elemente vorhanden sein, beispielsweise ein Zudosierer und/oder Mischer zur Herstellung der Leimflotte und/oder ein Dispergator und/oder ein oder mehrere weitere Extruder zur Umwandlung des extrudierten Leims in eine möglichst fein dispergierte Dispersion.

Der Extruder ist vorzugsweise ausgewählt aus der Gruppe bestehend aus einem Einwellenextruder, Doppelwellenextruder und Mehrwellenextruder. Als besonders zweckmäßig hat sich der Einsatz eines dichtkämmenden Doppelwellenextruders herausgestellt. Durch diesen wird eine sehr effiziente Mischung und ein hoher Druckaufbau ermöglicht. In einer anderen Ausführungsform des erfindungsgemäßen Verfahrens ist der Extruder bzw. bei einer Mehrzahl mindestens ein eingesetzter Extruder ein dichtkämmender Doppelwellenextruder. Dieser zeigt eine hohe Kompatibilität mit den erfindungsgemäß zu extrudierenden Mischungen umfassend ein Harnstoff-Formaldehyd-Kondensat und hat insbesondere den Vorteil, dass eine hervorragende Selbstreinigung des Extruders sichergestellt ist. Besonders vorzugsweise ist der Extruder ein kämmender, gleichläufiger Doppelwellenextruder. Dieser hat zusätzlich zu der hervorragenden Selbstreinigung den Vorteil, dass dieser den mitunter stark hochkondensierten und daher hochviskosen Harnstoff-Formaldehyd-Leim optimal fördern und Druck aufbauen kann.

In einer Ausführungsform der Erfindung ist die Leimapplikationseinrichtung (ii) ausgewählt aus der Gruppe bestehend aus einer oder mehrerer Sprühdüsen, Flüssigkeits-Druckdüsen, Flüssigkeit-Luft-Zerstäuberdüsen, oder Flüssigkeits-Dampfzerstäuberdüsen, einer Blow-Line-Beleimungseinrichtung, einer Fallschacht-Beleimungseinrichtung, und/oder einem mechanischen Beleimungsmischer, insbesondere einer Trommelbeleimungsanlage, die ggf. einen oder mehrere Atomizer aufweist.

In einer bevorzugten Ausführungsform der erfindungsgemäßen Vorrichtung ist die Leimapplikationseinrichtung eine Blow-Line-Beleimungseinrichtung. Für die Blow-Line-Beleimungseinrichtung gilt das bereits im Zusammenhang mit dem erfindungsgemäßen Verfahren Gesagte entsprechend.

Die Einrichtung zum Verpressen von lignocellulosehaltigem Material zu einem Holzwerkstoff (iii) kann insbesondere eine Mehretagenpresse, eine Einetagenpresse oder eine kontinuierlich arbeitende Presse sein. Bei den kontinuierlich arbeitenden Pressen können beispielsweise Doppelband-Pressen, Kalanderpressen oder Strangpressen eingesetzt werden.

Typischerweise ist die Einrichtung zum Verpressen des lignocellulosehaltigen Materials zu einem Holzwerkstoff (iii) eine Anlage zur Heißverpressung. Für die Heißverpressung gilt das bereits im Zusammenhang mit dem erfindungsgemäßen Verfahren Gesagte entsprechend.

### Holzwerkstoff

Die erfindungsgemäß erhältlichen Holzwerkstoffe sind aufgrund der mit der reaktiven Extrusion verbundenen Möglichkeit eines Erhalts von Harnstoff-Formaldehyd-Leimen oder melaminmodifizierten Harnstoff-Formaldehyd-Leimen mit besonders abgesenkten F/U-Molverhältnissen bei praxisgerechten Viskositätswerten besonders formaldehydemissionsarm. Dieser Vorteil wird durch den erfindungsgemäßen Einsatz einer reaktiven Extrusion zur Erhöhung des Kondensationsgrades und der Viskosität ermöglicht, welche den viskositätsmindernden Effekt einer darauffolgenden Harnstoffzugabe zur Einstellung eines abgesenkten F/U-Molverhältnisses in äußerst effizienter Weise kompensieren kann.

Die Erfindung stellt daher auch neuartige Holzwerkstoffe bereit, die sich in der durch die reaktive Extrusion erzeugten speziellen molekularen Struktur der Kondensationsprodukte in der ausgehärteten Harnstoff-Formaldehyd-Leimfuge von entsprechenden Holzwerkstoffen aus dem Stand der Technik unterscheiden. Außerdem stellt die Erfindung auch Holzwerkstoffe bereit, die durch eine sehr geringe Formaldehydemission gekennzeichnet sind, nämlich durch eine Formaldehydemission, die kleiner ist als 0,1 ppm, bevorzugt kleiner als 0,05 ppm und insbesondere bevorzugt kleiner als 0,04 ppm.

Dem Fachmann sind verschiedene Methoden bekannt um den Formaldehydgehalt eines erfindungsgemäß hergestellten Holzwerkstoffs zu bestimmen. Die Formaldehydgehalte der erfindungsgemäßen Holzwerkstoffe wie hier angegeben werden insbesondere nach DIN EN 717-1 (m³ Kammermethode) bestimmt.

Der erfindungsgemäße Holwerkstoff enthält ein ausgehärtetes Reaktionsprodukt des extrudierten Leims bzw. der Leimflotte. Wenn hierin von "Reaktionsprodukt" die Rede ist, dann ist damit das Reaktionsprodukt der Komponenten des extrudierten Leims bzw. der Leimflotte gemeint, d.h. das Produkt der Vernetzungsreaktion, wobei neue kovalente Bindungen zwischen den Leimkomponenten und ggf. zugesetzten Zusatzstoffen geknüpft wurden. Im Falle des extrudierten Leims ist das Reaktionsprodukt typischerweise ein fester Aminoplast, in den gegebenenfalls zugegebenes Ligninsulfonat und/oder Zucker einkondensiert ist. Durch die Nachweisbarkeit der Bestandteile Aminoplastharz, Ligninsulfonat und Zucker sowie der Bestimmung des Verhältnisses der einzelnen Strukturbestandteile im Kondensationsprodukt (z.B. Verhältnis von freiem Formaldehyd zu Methylenbrücken sowie das Verhältnis von Methylenbrücken zu Methylolen mittels NMR) kann der Fachmann das Reaktionsprodukt im Holzwerkstoff untersuchen.

In einer Ausführungsform enthält der erfindungsgemäße Holzwerkstoff das Reaktionsprodukt (d.h. den ausgehärteten Leim) in einer Menge von 1 bis 25 Gew.-% bezogen auf das Trockengewicht des Holzwerkstoffs. Vorzugsweise besteht der erfindungsgemäße Holzwerkstoff im Wesentlichen aus lignocellulosehaltigem Material. "Im Wesentlichen" bedeutet hierbei zu über 70 Gew.-%, 85 Gew.-%, 90 Gew.-%, 93 Gew.-% oder 95 Gew.-%, jeweils bezogen auf das Trockengewicht des Holzwerkstoffs.

Wenn hier von "Holzwerkstoffen" die Rede ist, so sind damit alle Werkstoffe gemeint, die lignocellulosehaltiges Material, d.h. insbesondere Holz, enthalten. Holzwerkstoffe im Sinne der Erfindung sind vorzugsweise ausgewählt aus der Gruppe bestehend aus einer Spanplatte, einer OSB-Platte, einer Faserplatte, einem furnierbasierenden Holzwerkstoff, einem Faserformteil und einem Spanholzformteil. Erfindungsgemäße Holzwerkstoffe sind insbesondere Span- oder Faserplatten. Gemäß einer bevorzugten Ausführungsform handelt es sich bei dem erfindungsgemäßen Holzwerkstoff um einen Holzspanwerkstoff, insbesondere eine Span- oder OSB-Platte. Erfindungsgemäße Holzwerkstoffe lassen sich besonders gut zur Herstellung eines Laminats, eines Bodenbelags, einer Arbeitsplatte, einer Tischplatte oder eines Möbelstücks verwenden.

Wenn hier von "Spanplatte" die Rede ist, dann werden darunter Spanplatten im weiteren Sinne verstanden, nämlich Holzwerkstoffe, die aus spanend hergestellten Holzpartikeln und mittels Wärme und Druck unter Verwendung mindestens eines Bindemittels hergestellt wurden.

Eine andere Produktgruppe im Bereich der Holzwerkstoffe, die nicht von dem Begriff "Holzspanwerkstoff" oder "Spanplatte" wie hier verwendet umfasst ist, stellen die Holzfaserwerkstoffe dar. Zu letzteren gehören Faserplatten, wie beispielsweise die mitteldichten (MDF) und hochdichten (HDF) Faserplatten.

Grundsätzlich kennt der Fachmann unterschiedliche Holzspanwerkstoffe. Beispiele hierfür sind Spanplatten, Flachpressplatten, Einschichtplatten, Mehrschichtplatten, leichte Flachpressplatten, Strangpressplatten, Strangpressröhrenplatten (ET - Extruded Tubular), Strangpressvollplatten (ES - Extruded Solid), kunststoffbeschichtete dekorative Flachpressplatten (MFB - Melamine Faced Board), Spanholzformteile oder Grobspanplatten (OSB - Oriented Strand Board). Die Einteilung der Spanplatten kann nach DIN EN 312 erfolgen, wobei sich die Spanplatten in Festigkeit und Feuchtebeständigkeit unterscheiden können. OSB-Platten können gemäß ihrer Verwendung nach EN 300 eingeteilt werden. Solche Holzspanwerkstoffe können beispielsweise zu Laminaten, Bodenbelägen, Arbeitsplatten, Tischplatten, Paletten und/oder Holzformteilen weiterverarbeitet werden.

Gemäß einer Ausführungsform der Erfindung ist der Holzwerkstoff eine Holzspanwerkstoffplatte. Vorzugsweise ist der Holzwerkstoff eine Span- oder OSB-Platte. Gemäß einer anderen Ausführungsform handelt es sich bei dem erfindungsgemäßen Holzwerkstoff um eine Faserplatte.

### Verwendung

Die Erfindung betrifft auch die Verwendung einer reaktiven Extrusion zur Herstellung formaldehydemissionarmer Holzwerkstoffe. Gegenstand der Extrusion ist dabei insbesondere die oben bereits im Detail beschriebene Mischung umfassend ein Harnstoff-Formaldehyd-Kondensat. Der erfindungsgemäß ermöglichte Effekt der Reduktion der Formaldehydemission wurde oben bereits erläutert. Die Erfindung betrifft ferner auch die Verwendung von Ligninsulfonat und/oder Zucker als Phasenvermittler und/oder Viskositätsregler in der reaktiven Extrusion, insbesondere der reaktiven Extrusion einer Mischung umfassend ein Harnstoff-Formaldehyd-Kondensat in der Leimherstellung für die Holzwerkstoffproduktion. Diesbezüglich gilt das im Zusammenhang mit dem erfindungsgemäßen Verfahren oben Gesagte entsprechend.

### FIGURENBESCHREIBUNG

Im Folgenden wird die Erfindung anhand von Figuren beschrieben, die bestimmte Ausführungsformen der Erfindung darstellen. Die Erfindung ist jedoch nicht limitiert durch diese Ausführungsformen, die lediglich zu illustrativen Zwecken in den Figuren dargestellt sind.
- Figur 1: zeigt verschiedene Ausführungsformen des erfindungsgemäßen Verfahrens, welche sich unter anderem in dem Startmaterial (1, 2, 3) unterscheiden, das dem Extruder (A) zugeführt wird.
- Figur 2: zeigt eine Ausführungsform des Extruders, welcher für die Durchführung des erfindungsgemäßen Verfahrens geeignet ist.
- Figur 3: zeigt ein auch in den Ausführungsbeispielen verwendetes System aus Extruder und Zufuhreinrichtungen für die einzelnen Komponenten, die zur Herstellung des extrudierten Leims (35) dienen.

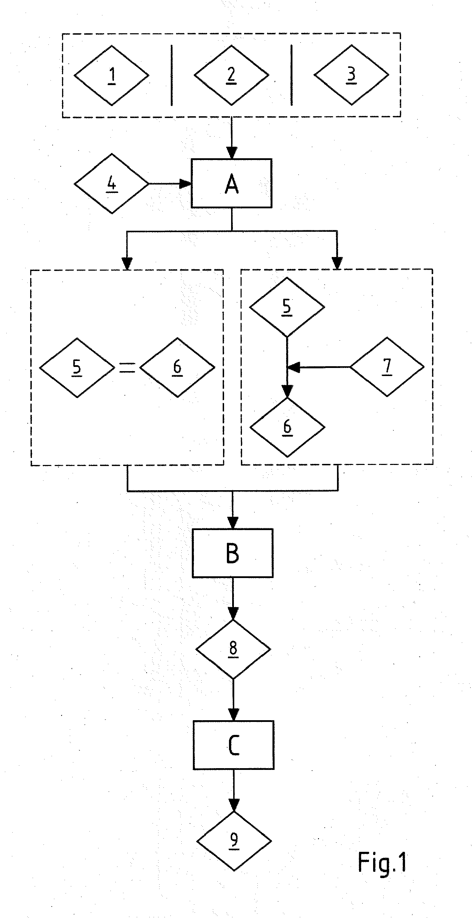

Figur 1 beschreibt verschiedene Ausführungsformen des erfindungsgemäßen Verfahrens. Dem Extruder (A) können verschiedene Startmaterialien zugeführt werden. Startmaterial kann ein Harnstoff-Formaldehyd-Konzentrat (UFC)(1) sein. Als Startmaterial kann jedoch auch eine Mischung umfassend ein Harnstoff-Formaldehyd-Kondensat (2) dienen, welche lediglich bereits die Methylolierungs- oder Vorkondensationsphase durchlaufen hat. Außerdem ist es möglich, dem Extruder (A) einen Harnstoff-Formaldehyd-Leim (3), welcher bereits die Methylolierungs-, Vorkondensations- und Kondensationsphase der Leimherstellung durchlaufen hat, zuzuführen. Alle drei Startmaterialien (1), (2) und (3) fallen unter den Begriff "Mischung umfassend ein Harnstoff-Formaldehyd-Kondensat" wie hier verwendet. Das dem Extruder jeweils zugeführte Startmaterial wird einer reaktiven Extrusion unterworfen, wobei vor, während und/oder am Ende der reaktiven Extrusion weitere Komponenten (4) hinzugefügt oder gegebenenfalls hinzugefügt werden können. Das Produkt der reaktiven Extrusion ist der extrudierte Leim (5), welcher beim Verlassen des Extruders entweder bereits als einsatzbereite Leimflotte (6) vorliegt, die direkt auf lignocellulosehaltiges Material mittels einer Leimapplikationseinrichtung (B) aufgebracht werden kann oder der extrudierte Leim (5) wird zuvor noch einer weiteren Prozessierung unterzogen, an deren Ende der Erhalt einer Leimflotte (6) steht, die einsatzbereit ist für die Auftragung auf lignocellulosehaltiges Material mittels einer Leimapplikationseinrichtung (B) ist. Das beleimte lignocellulosehaltige Material (8) wird anschließend unter Hitze und Druck mittels einer Presse (C) zu einem Holzwerkstoff (9) gepresst.

Für alle drei Startmaterialien (1), (2) und (3) findet während der reaktiven Extrusion im Extruder eine ausgeprägte Kondensationsphase statt, durch die hochmolekulare Harzgrundkörper erzeugt werden. Dadurch tritt eine drastische Erhöhung der Viskosität der eingesetzten Mischung ein. Zumindest intermediär beträgt die Viskosität des im Extruder gebildeten kondensierten Harnstoff-Formaldehyd-Leims 500 bis 100000 mPa·s, bevorzugt 1000 bis 50000 mPa·s und insbesondere bevorzugt 1500 bis 10000 mPa·s, jeweils gemessen bei 20 °C und einem Schergefälle von D=200 1/s. Vor, während und/oder am Ende der reaktiven Extrusion des Leims können weitere Komponenten (4) hinzugefügt oder gegebenenfalls hinzugefügt werden. Diese weiteren Komponenten (4) können Harnstoff und/oder eine melaminhaltige Komponente und gegebenenfalls Zusatzstoffe wie Ligninsulfonat und/oder Zucker sein. Außerdem können als weitere Komponenten (4) Zusatzstoffe in Form von Hydrophobierungsmitteln, Plastifizierungsmitteln, Vernetzungsmitteln, Beschleunigern (beispielsweise PMDI, Amine), Brandschutzmitteln, Pilzschutzmitteln, Insektiziden, Netzmitteln, Farben, Füllstoffen und/oder Verstärkungsstoffen der reaktiven Extrusion im Extruder (A) beigefügt werden. Das Produkt der im Extruder ablaufenden reaktiven Extrusion ist der extrudierte Leim (5). Dieser kann einerseits bereits direkt als Leimflotte (6) dienen, die mittels einer Leimapplikationseinrichtung (B) auf lignocellulosehaltiges Material aufgebracht wird. Andererseits ist es auch möglich, dass der extrudierte Leim (5) erst noch weiteren Verfahrensschritten unterworfen werden muss, insbesondere einem Abmischen oder Hinzufügen von weiteren Komponenten (7) wie Hydrophobierungsmittel, Insektizide, Brandschutzmittel, Farben, Geruchsfänger und Leitfähigkeitsmittel, um die Leimflotte (6) zu erhalten. Die Leimflotte (6) wird mittels einer Leimapplikationseinrichtung (B) auf lignocellulosehaltiges Material aufgebracht, bevorzugt durch Aufsprühen mittels der Leimapplikationseinrichtung.

Typischerweise wird die Leimflotte (6) auf das lignocellulosehaltige Material aufgebracht bevor dieses zu einer Matte gestreut worden ist. Das beleimte, in eine Matte gestreute lignocellulosehaltige Material (8) wird anschließend durch eine Presse (C) unter Hitze und Druck zu einem Holzwerkstoff (9) verpresst.

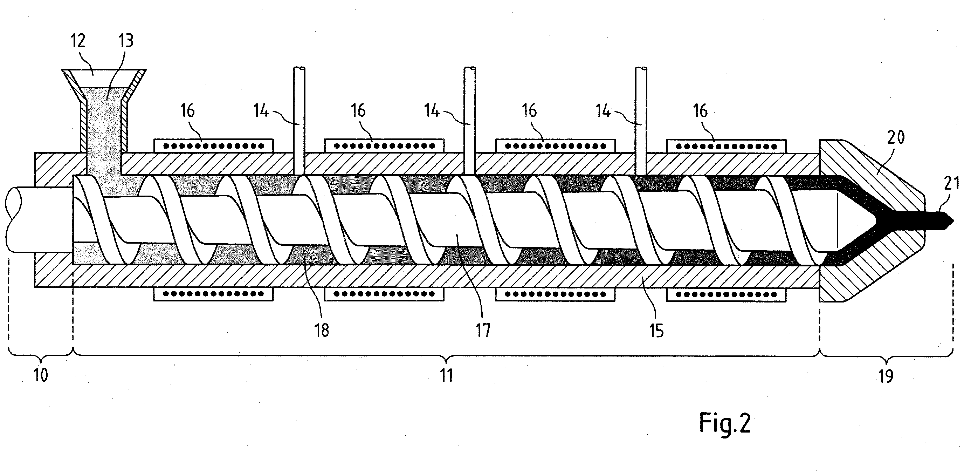

Figur 2 beschreibt eine Ausführung des Extruders, welcher für die Durchführung des erfindungsgemäßen Verfahrens geeignet ist. Der Extruder dieser Ausführungsform enthält einen Antriebsteil (10), einen Verfahrensteil (11) und einen Austragsteil (19). Mit Hilfe des Antriebsteils (10) wird die in einen Zylinder (15) eingebettete Schnecke (17) angetrieben. Der Verfahrensteil (11) umfasst eine Befülleinrichtung (12) durch die das Startmaterial (13) für die reaktive Extrusion dem Extruder zugeführt wird. Des Weiteren umfasst der Verfahrensteil (11) Einspeisöffnungen (14), durch die dem in der Extrusion befindlichem Material (18), d.h. dem Leim, zu unterschiedlichen Stadien der reaktiven Extrusion weitere Komponenten hinzugefügt werden können. Dazu sind die Einspeisöffnungen (14) entlang der gesamten Längsachse des Zylinders (15) verteilt, so dass die etwaigen weiteren Komponenten in unterschiedlichen Stadien der reaktiven Extrusion dem in der reaktiven Extrusion befindlichen Material (18) hinzugefügt werden können. Durch die Einspeiseöffnungen (14) können jedoch auch Proben des in der reaktiven Extrusion befindlichen Materials (18), d.h. des Leims, entnommen werden, sodass der Fortgang der reaktiven Extrusion messtechnisch verfolgbar ist. Das in der reaktiven Extrusion befindliche Material (18) verändert im Verlauf der reaktiven Extrusion im Zylinder (15) unter anderem seine Viskosität, wobei zumindest intermediär Viskositäten von 200 bis 100000 mPa·s, bevorzugt von 300 bis 50000 mPa·s und insbesondere bevorzugt von 400 bis 10000 mPa·s, jeweils gemessen bei 20 °C und einem Schergefälle von D=200 1/s nach EN ISO 3219, erreicht werden. Die Reaktionsbedingungen für die reaktive Extrusion, welche im Inneren des Zylinders (15) des Verfahrensteils (11) abläuft, kann durch verschiedene Parameter beeinflusst werden. Beispielsweise kann die Drehzahl der Schnecke (17) angepasst werden, die Einfluss auf die Verweilzeit des in der reaktiven Extrusion befindlichen Materials (18) im Zylinder (15) hat. Des Weiteren kann auch die Reaktionstemperatur durch Temperaturregulierungselemente (16) entlang des Zylinders (15) angepasst werden. Das Produkt der reaktiven Extrusion ist der extrudierte Leim (21). Dieser gelangt durch eine Düse (20) im Austragsteil (19) aus dem Extruder.

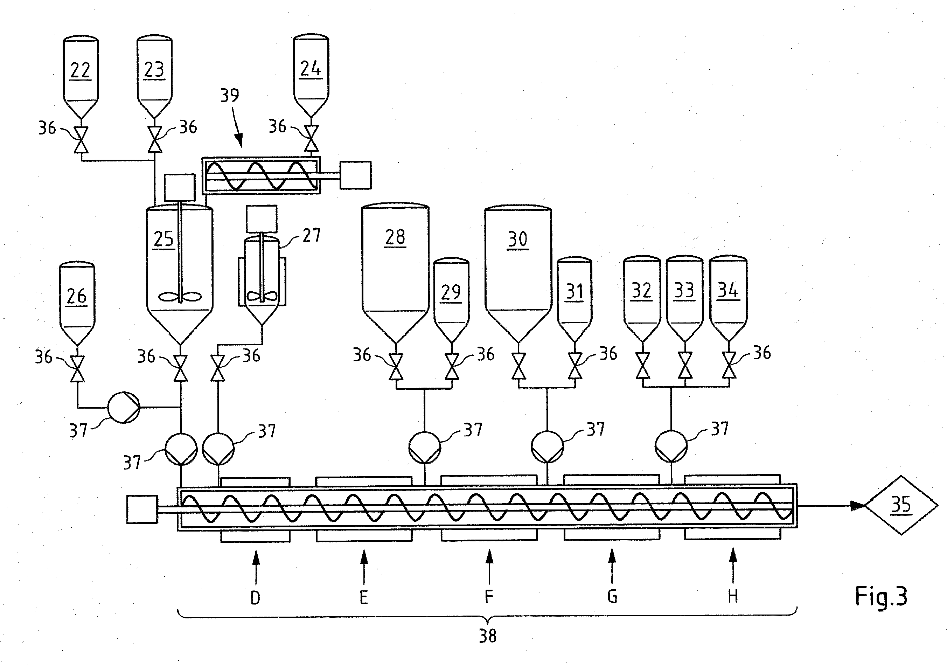

Figur 3 zeigt eine Ausführungsform des Extruders mit Zufuhrsystemen für die einzelnen Komponenten des extrudierten Leims (35) wie auch in den Ausführungsbeispielen verwendet und näher erläutert wird. Dabei umfasst der Extruder (38) eine Einzugszone (D), eine Kondensationszone 1 (E), eine Kondensationszone 2 (F), eine Kühlzone (G) und eine Druckzone (H). Dem Extruder können in der Einzugszone (D) Zucker und/oder Ligninsulfonat aus dem Behälter (22), ein Harnstoff-Formaldehyd-Konzentrat (UFC) aus dem Behälter (23) sowie Harnstoff aus dem Behälter (24) zugeführt werden. Der Zucker und/oder das Ligninsulfonat, der Harnstoff sowie das UFC können vor der Einführung in die Einzugszone (D) des Extruders in einem Vormischbehälter (25) vermengt werden. Der Harnstoff aus dem Behälter (24) wird dabei über einen Extruder (39) in den Vormischbehälter (25) eindosiert. Außerdem kann dem Extruder in der Einzugszone (D) Säure aus dem Behälter (26) zugemischt werden sowie eine Wachsschmelze oder Wachsdispersion aus dem Behälter (27). Nach der Kondensationszone 1 (E) kann dem Extruder aus dem Behälter (28) ein weiterer Zucker und aus dem Behälter (29) ein Amin oder Lauge zugeführt werden. Nach der Kondensationszone 2 (F) kann dem Extruder aus dem Behälter (30) Verdünnungswasser und aus dem Behälter (31) nochmals ein Amin oder Lauge zugeführt werden. Nach der Kühlzone (G) können dem Extruder aus den Behältern (32), (33) und (34) jeweils PMDI, Additive und Vernetzer zugeführt werden. Die vorstehend aufgeführten Behälter sind jeweils durch Ventile (36) und Pumpen (37) mit den jeweiligen Zonen des Extruders verbunden. Die reaktive Extrusion im Extruder (38) führt zum extrudierten Leim (35).

### AUSFÜHRUNGSBEISPIELE

Die folgenden Ausführungsbeispiele dienen der näheren Erläuterung der Erfindung, insbesondere in Bezug auf bestimmte Ausführungsformen der Erfindung. Die Ausführungsbeispiele sollen die vorliegende Offenbarung jedoch nicht einschränken.

### Beispiel 1:

In einem Zweiwellenschneckenkneter (ZSK) mit dichtkämmenden gleichlaufenden Schnecken (38) wird eine reaktive Extrusion (siehe Figur 3) wie folgt durchgeführt:
Der Extruder ist folgendermaßen parametrisiert:

| Bezeichnung (x) | Extruderzone | Beschreibung | Temp. T(x) [°C] | Druck p(x) [bar] |
|---|---|---|---|---|
| D | Einzugszone | Zuführung der Hauptkomponenten, Vormischung, Temperierung | 40 | 2 |
| E | Kondensationszone 1 | Mischen, Heizen, Kondensation | 90 | 5 |
| F | Kondensationszone 2 | Mischen, Kühlen, Kondensation | 60 | 2 |
| G | Kühlzone | Mischen, Kühlen | 40 | 2 |
| H | Druckzone | Homogenisieren, Kühlen, Druckaufbau | 40 | 10 |

Der Durchsatz des Extruders ist so eingestellt, dass die durchschnittliche Verweilzeit in der Summe der beiden Kondensationszonen 1 und 2 (E und F) 4,5 min beträgt.

Das folgende UF-Kondensat wird aus dem Behälter (23) als Startmaterial für die reaktive Extrusion eingesetzt:

| UF Leim | | |
|---|---|---|
| Molverhältnis | [F/(NH₂)₂] | 1,0 |
| Trockensubstanz | [%] | 65,2 |
| Viskosität | [mPa·s] | 345 |
| pH-Wert | | 7,9 |

Der folgende Zucker wird aus dem Behälter (22) für die reaktive Extrusion eingesetzt:

| | | | |
|---|---|---|---|
| Fructosesirup | F95 | | |
| Trockensubstanz | | [%] | 75,5 |
| Viskosität | | [mPa·s] | 222 |
| pH-Wert | | | 4,5 |

Ein Standard Harnstoff-Formaldehyd Leim, wie er in der Holzwerkstoffproduktion üblich ist, wird aus dem Behälter (23) im Vormischbehälter (25) mit 5 Gew.-% Fructose aus dem Behälter (22) (bezogen auf den Standard Harnstoff-Formaldehyd Leim) abgemischt. Das Gemisch enthaltend den Standard Harnstoff-Formaldehyd Leim und Fructose wird über Zugabe von 30 Gew.-%iger Essigsäure aus dem Vorlagebehälter (26) auf einen pH Wert von 5,1 eingestellt, bevor es über eine Aufgabepumpe in den Einzugsbereich (D) des Extruders gespeist wird. In der Einzugszone (D) wird die Reaktionsmischung homogenisiert und auf T(D) temperiert. In der Kondensationszone 1 (E) erfolgt die reaktive Extrusion bei T(E) und p(E) bis zu dem gewünschten Kondensationsgrad, der soweit geführt wird, dass nach Zugabe von 10 Gew.-%iger Natronlauge aus dem Behälter (29), Passage der Kondensationszone 2 (F), nach Rückverdünnung mit Wasser aus dem Behälter (30) vor der Kühlzone (G) und nach Verlassen der Druckzone (H) eine endgültige Trockensubstanz von 66 % (bestimmt nach EN ISO 3251) bei einer Viskosität (gemessen bei 20°C und einem Schergefälle von D = 200 1/s, EN ISO 3219) von 1500 ± 300 mPa·s und einem pH = 5,6 erreicht wird. Die Regelung der Viskosität erfolgt durch Feineinstellung des pH-Wertes der Ausgangsmischung.

Die Reaktionsmischung wird direkt in einer industrietypischen Spanplattenproduktion anstelle des sonst üblichen Harnstoff-Formaldehyd-Leims verwendet und dort über die Düsen eines mechanischen Beleimmischers auf die Holzspäne aufgebracht. Aus den derart beleimten Holzspänen werden anschließend in üblicher Weise Spanplatten hergestellt.

### Beispiel 2:

In einem Zweiwellenschneckenkneter (ZSK) mit dichtkämmenden gleichlaufenden Schnecken wird eine reaktive Extrusion (siehe Fig. 3) wie folgt durchgeführt:
Der Extruder ist folgendermaßen parametrisiert:

| Bezeichnung (x) | Extruderzone | Beschreibung | Temp. T(x) [°C] | Druck p(x) [bar] |
|---|---|---|---|---|
| D | Einzugszone | Zuführung der Hauptkomponenten, Vormischung, Temperierung | 40 | 2 |
| E | Kondensationszone 1 | Mischen, Heizen, Kondensation | 110 | 6 |
| F | Kondensationszone 2 | Mischen, Kühlen, Kondensation | 70 | 2 |
| G | Kühlzone | Mischen, Kühlen | 40 | 2 |
| H | Druckzone | Homogenisieren, Kühlen, Druckaufbau | 40 | 10 |

Der Durchsatz des Extruders ist so eingestellt, dass die durchschnittliche Verweilzeit in der Summe der beiden Kondensationszonen 1 und 2 (E und F) 4,5 min beträgt.

Das folgende UF-Kondensat aus dem Behälter (23) wird als Startmaterial verwendet:

| Urea Formaldehyde concentrate | UFC 80 | | |
|---|---|---|---|
| Molverhältnis | MV | [F/(NH₂)₂] | 4,9 |
| Festharz | FH | [%] | 80,2 |
| Viskosität | | [mPa·s] | 280 |
| pH-Wert | | | 7,8 |

Der folgende Zucker aus dem Behälter (22) wird eingesetzt:

| Fructosesirup | F95 | | |
|---|---|---|---|
| Trockensubstanz | | [%] | 75,5 |
| Viskosität | | [mPa·s] | 222 |
| pH-Wert | | | 4,5 |

Das UFC aus dem Behälter (23) wird im Vormischbehälter (25) mit geprilltem Harnstoff aus dem Behälter (24) gemischt, sodass sich ein U/F-Molverhältnis von 1:1,0 ergibt (Verhältnis ∼10:9). Zu dieser Mischung werden 2 Gew.-% Fructose aus dem Behälter (22) (bezogen auf das UFC) im Vormischbehälter (25) zugegeben. Das Gemisch enthaltend UFC und Fructose wird über Zugabe von 30 Gew.-%iger Essigsäure aus dem Vorlagebehälter (26) auf einen pH Wert von 4,8 eingestellt, bevor es über eine Aufgabepumpe in den Einzugsbereich (A) des Extruders gespeist wird. In der Einzugszone (D) wird die Reaktionsmischung homogenisiert und auf T(D) temperiert. In der Kondensationszone 1 (E) erfolgt die reaktive Extrusion bei T(E) und p(E) bis zu dem gewünschten Kondensationsgrad, der soweit geführt wird, dass nach Zugabe von 10 Gew.-%iger Natronlauge aus dem Behälter (29) und weiteren 4 Gew.-% Fructose (bezogen auf das vorliegende Gesamtgemisch) aus dem Behälter (28), Passage der Kondensationszone 2 (F), nach Rückverdünnung mit Wasser aus dem Behälter (30) vor der Kühlzone (G) und nach Verlassen der Druckzone (H) eine endgültige Trockensubstanz 60 % (bestimmt nach EN ISO 3251) bei einer Viskosität (gemessen bei 20°C und einem Schergefälle von D=200 1/s, EN ISO 3219) von 1200 ± 250 mPa·s und einem pH = 5,2 erreicht wird. Die Regelung der Viskosität und damit des Kondensationsgrades erfolgt durch Feineinstellung des pH-Wertes der Ausgangsmischung.

Die Reaktionsmischung wird direkt in einer industrietypischen Spanplattenproduktion anstelle des sonst üblichen Harnstoff-Formaldehyd-Leims verwendet und dort über die Düsen eines mechanischen Beleimmischers auf die Holzspäne aufgebracht. Aus den derart beleimten Holzspänen werden anschließend in üblicher Weise Spanplatten hergestellt.

### Beispiel 3:

Es wird wie in Beispiel 2 vorgegangen. Zusätzlich wird bei der reaktiven Extrusion jedoch nach der Kondensationszone (F) die pH-Einstellung vorgenommen durch Zugabe von Natronlauge aus dem Behälter (31) sowie von 0,9 Gew.-% Hexamethylendiamin aus dem Behälter (31) (bezogen auf das eingesetzte UFC), so dass sich ein pH-Wert von 9,0 ± 0,2 ergibt.

### Beispiel 4:

Es wird wie in Beispiel 1 vorgegangen. Zusätzlich wird bei der reaktiven Extrusion in die Einzugszone zum beschriebenen Gemisch enthaltend den UF-Leim und Zucker 1,1 Gew.-% Wachsschmelze aus dem Behälter (27) (bezogen auf den UF-Leim) zudosiert.

### Beispiel 5:

In einem Zweiwellenschneckenkneter (ZSK) mit dichtkämmenden gleichlaufenden Schnecken (38) wird eine reaktive Extrusion (siehe Fig. 3) wie folgt durchgeführt:
Der Extruder ist folgendermaßen parametrisiert:

| Bezeichnung (x) | Extruderzone | Beschreibung | Temp. T(x) [°C] | Druck p(x) [bar] |
|---|---|---|---|---|
| D | Einzugszone | Zuführung der Hauptkomponenten, Vormischung, Temperierung | 40 | 2 |
| E | Kondensationszone 1 | Mischen, Heizen, Kondensation | 80 | 5 |
| F | Kondensationszone 2 | Mischen, Kühlen, Kondensation | 60 | 2 |
| G | Kühlzone | Mischen, Kühlen | 40 | 2 |
| H | Druckzone | Homogenisieren, Kühlen, Druckaufbau | 40 | 16 |

Der Durchsatz des Extruders ist so eingestellt, dass die durchschnittliche Verweilzeit in der Summe der beiden Kondensationszonen 1 und 2 (E und F) 5,5 min beträgt.

Das folgende UF-Kondensat aus dem Behälter (23) wird als Startmaterial verwendet:

| U(m)F Leim | | | |
|---|---|---|---|
| Molverhältnis | MV | [F/(NH₂)₂] | 0,96 |
| Trockensubstanz | | [%] | 65,0 |
| Viskosität | | [mPa·s] | 392 |
| pH-Wert | | | 8,1 |
| Melamingehalt | | [%] | 3,0 |

Der folgende Zucker aus dem Behälter (22) wird eingesetzt:

| Fructosesirup | F95 | | |
|---|---|---|---|
| Trockensubstanz | | [%] | 75,5 |
| Viskosität | | [mPa·s] | 222 |
| pH-Wert | | | 4,5 |

Das folgende Ligningsulfonat aus dem Behälter (22) wird eingesetzt:

| Magnesiumligninsulfonat | Collex 55 G | | |
|---|---|---|---|
| Trockensubstanz | | [%] | 55,1 |
| Viskosität | | [mPa·s] | 2510 |
| pH-Wert | | | 6,1 |

Ein melaminmodifizierter Standard Harnstoff-Formaldehyd Leim aus dem Behälter (23) wird im Vormischbehälter (25) mit 6 Gew.-% (bezogen auf den Standard Harnstoff-Formaldehyd Leim) eines Gemisches aus 3,5 Gewichtsanteilen Fructose und 2,5 Gewichtsteilen Magnesiumligninsulfonat aus dem Behälter (22) abgemischt. Der melaminmodifizierte Standard Harnstoff-Formaldehyd Leim mit der Fructose und dem Ligninsulfonat wird über Zugabe von 30 Gew.-%iger Essigsäure aus dem Vorlagebehälter (26), auf einen pH-Wert von 5,4 eingestellt, bevor es über eine Aufgabepumpe in den Einzugsbereich (D) des Extruders gespeist wird. In der Einzugszone (D) wird die Reaktionsmischung homogenisiert und auf T(D) temperiert. In der Kondensationszone 1 (E) erfolgt die reaktive Kondensation bei T(E) und p(E) bis zu dem gewünschten Kondensationsgrad, der soweit geführt wird, dass nach Zugabe von 10 Gew.-%iger Natronlauge aus dem Behälter (29), Passage der Kondensationszone 2 (F), nach Rückverdünnung mit Wasser aus dem Behälter (30) vor der Kühlzone (G) und nach Verlassen der Druckzone (H) eine endgültige Trockensubstanz 65% (bestimmt nach EN ISO 3251) bei einer Viskosität (gemessen bei 20°C und einem Schergefälle von D=200 1/s, EN ISO 3219) von 1000 ± 300 mPa·s und einem pH = 6,8 erreicht wird. Die Regelung der Viskosität erfolgt durch Feineinstellung des pH-Wertes der Ausgangsmischung.

Die Reaktionsmischung wird direkt über die Beleimdüsen der BlowLine auf die Fasern in einer industrietypischen MDF-Anlage gefahren und die derart beleimten Fasern darin in gewohnter Weise zu MDF-Platten verpresst.

### Beispiel 6:

Es wird wie in Beispiel 3 vorgegangen. Zusätzlich erfolgt bei der reaktiven Extrusion jedoch eine weitere Zugabe von 2 Gew.- % Fructose (bezogen auf das eingesetzte UF-Kondensat) aus dem Behälter (28) vor der Kondensationszone 2 (F). Außerdem ist das aus dem Behälter (31) zugegebene Amin ein Bis(hexamethylen)triamin.

### Beispiel 7:

Es wird wie in Beispiel 1 vorgegangen. Zusätzlich wird bei der reaktiven Extrusion jedoch vor der Druckzone (H) 0,5 Gew.-% (bezogen auf das eingesetzte UF-Kondensat) PMDI aus dem Behälter (32) zudosiert. Außerdem wird der extrudierte Leim durch Druckerhöhung in der Druckzone (H) mit 45 bar über Hochdruckdüsen in die Fallschachtbeleimung der Spanplattenanlage transportiert.

### Beispiel 8:

Es wird wie in einem der Beispiele 1 bis 7 vorgegangen. Zusätzlich wird bei der reaktiven Extrusion jedoch vor der Druckzone (H) eine Farbzubereitung aus dem Behälter (33) zum Einfärben der Holzwerkstoffplatte zudosiert.

### Beispiel 9:

Es wird wie in einem der Beispiele 1 bis 7 vorgegangen. Zusätzlich wird bei der reaktiven Extrusion jedoch vor der Druckzone (H) ein Insektizid/Fungizid aus dem Behälter (33) zudosiert.

### Beispiel 10:

Es wird wie in einem der Beispiele 1 bis 7 vorgegangen. Zusätzlich wird bei der reaktiven Extrusion jedoch vor der Druckzone (H) ein Brandschutzmittel aus dem Behälter (33) zudosiert.

### Beispiel 11:

Es wird wie in einem der Beispiele 1 bis 7 vorgegangen. Zusätzlich wird bei der reaktiven Extrusion jedoch vor der Druckzone (H) ein Leitfähigkeitsmittel aus dem Behälter (33) zudosiert.

## Patentansprüche

1. Verfahren zur Herstellung eines aminoplastisch gebundenen Holzwerkstoffs, umfassend die folgenden Schritte:
a. Bereitstellen einer Mischung umfassend ein Harnstoff-Formaldehyd-Kondensat;
b. Reaktive Extrusion der Mischung aus Schritt a. in mindestens einem Extruder, wodurch ein extrudierter Leim erhalten wird;
c. Beleimung von lignocellulosehaltigem Material durch Aufbringen einer Leimflotte enthaltend oder bestehend aus dem extrudierten Leim aus Schritt b. auf das lignocellulosehaltige Material, wobei das Aufbringen mittels einer Leimapplikationseinrichtung erfolgt;
d. Verpressen des beleimten lignocellulosehaltigen Materials aus Schritt c. unter Druck- und Temperatureinwirkung zu einem Holzwerkstoff.

2. Verfahren nach Anspruch 1 **dadurch gekennzeichnet, dass** am Anfang, während und/oder am Ende der reaktiven Extrusion in Schritt b.
- Harnstoff und/oder eine melaminhaltige Komponente, und
- gegebenenfalls Zusatzstoffe, insbesondere Ligninsulfonat und/oder Zucker, hinzugegeben werden.

3. Verfahren nach Anspruch 2 **dadurch gekennzeichnet, dass** die melaminhaltige Komponente ein Melamin-Harnstoff-Formaldehyd-Leim oder ein melaminmodifizierter Harnstoff-Formaldehyd-Leim ist.

4. Verfahren nach einem der vorstehenden Ansprüche, **dadurch gekennzeichnet, dass** die Mischung umfassend ein Harnstoff-Formaldehyd-Kondensat
- ein Harnstoff-Formaldehyd-Konzentrat (UFC) ist oder dieses enthält oder
- ein ggf. erst vorkondensierter oder bereits applikationsfertiger Harnstoff-Formaldehyd-Leim ist.

5. Verfahren nach einem der vorstehenden Ansprüche und insbesondere nach Anspruch 4, **dadurch gekennzeichnet, dass** während und/oder am Ende der reaktiven Extrusion in Schritt c. Harnstoff in einer Menge zugegeben wird, so dass das Endmolverhältnis von Formaldehyd zu Harnstoff im extrudierten Leim, der aus Schritt b. erhalten wird, von 0,75 bis 1,3, bevorzugt von 0,85 bis 1,2 und insbesondere bevorzugt von 0,9 bis 1,1 beträgt.

6. Verfahren nach einem der vorstehenden Ansprüche, **dadurch gekennzeichnet, dass** der extrudierte Leim, der aus Schritt b. erhalten wird, eine wässrige Dispersion ist, insbesondere ein trüber, bereits nachkondensierter und applikationsfertiger Harnstoff-Formaldehyd-Leim.

7. Verfahren nach einem der vorstehenden Ansprüche, **dadurch gekennzeichnet, dass** die Viskosität der in Schritt a. bereitgestellten Mischung umfassend ein Harnstoff-Formaldehyd-Kondensat sich während der reaktiven Extrusion in Schritt b. verändert, wobei die reaktive Extrusion so durchgeführt wird, dass im Extruder gemessen bei 20 °C und einem Schergefälle von D=200 1/s nach EN ISO 3219 eine intermediäre Viskosität der Mischung von 200 bis 100000 mPa·s, bevorzugt von 300 bis 50000 mPa·s und insbesondere bevorzugt von 400 bis 10000 mPa·s erreicht wird.

8. Verfahren nach einem der vorstehenden Ansprüche und insbesondere nach Anspruch 7, **dadurch gekennzeichnet, dass** die reaktive Extrusion in Schritt b. so durchgeführt wird, dass der extrudierte Leim, der aus Schritt b. erhalten wird, gemessen bei 20 °C und einem Schergefälle von D=200 1/s eine Endviskosität von 100 bis 3000 mPa·s, bevorzugt von 200 bis 2000 mPa·s und insbesondere bevorzugt von 300 bis 1500 mPa·s aufweist, wobei das Einstellen der Endviskosität insbesondere durch Zugabe von Harnstoff, Ligninsulfonat und/oder Zucker während oder am Ende der reaktiven Extrusion erfolgt.

9. Verfahren nach einem der vorstehenden Ansprüche, **dadurch gekennzeichnet, dass** zumindest die Schritte b. bis c. des Verfahrens kontinuierlich ablaufen, insbesondere wobei der in Schritt b. verwendete Extruder mit der in Schritt c. verwendeten Leimapplikationseinrichtung verbunden ist.

10. Vorrichtung zur Durchführung eines Verfahrens nach einem der Ansprüche 1 bis 9, umfassend
i. einen Extruder,
ii. eine an den Extruder angeschlossene Leimapplikationseinrichtung,
iii. eine Einrichtung zum Verpressen von lignocellulosehaltigem Material zu einem Holzwerkstoff.

11. Verfahren nach einem der Ansprüche 1 bis 9 oder Vorrichtung nach Anspruch 10, **dadurch gekennzeichnet, dass** die Leimapplikationseinrichtung ausgewählt ist aus der Gruppe bestehend aus einer oder mehrerer Sprühdüsen, insbesondere Flüssigkeits-Druckdüsen, Flüssigkeit-Luft-Zerstäuberdüsen, oder Flüssigkeits-Dampfzerstäuberdüsen, einer Blow-Line-Beleimungseinrichtung, einer Fallschacht-Beleimungseinrichtung, und/oder einem mechanischen Beleimungsmischer, insbesondere einer Trommelbeleimungsanlage, die ggf. einen oder mehrere Atomizer aufweist.

12. Verfahren nach einem der Ansprüche 1 bis 9 oder 11 oder Vorrichtung nach Anspruch 10, **dadurch gekennzeichnet, dass** der Extruder ein Doppelschneckenextruder, insbesondere ein dichtkämmender, gleichlaufender Doppelschneckenextruder ist.

13. Holzwerkstoff hergestellt nach einem Verfahren gemäß einem der Ansprüche 1 bis 9 oder 11 bis 12, **dadurch gekennzeichnet, dass** der Holzwerkstoff eine Formaldehydemission aufweist, die kleiner ist als 0,1 ppm, bevorzugt kleiner als 0,05 ppm und insbesondere bevorzugt kleiner als 0,04 ppm gemessen nach DIN EN 717-1.

14. Verwendung einer reaktiven Extrusion einer Mischung umfassend ein Harnstoff-Formaldehyd-Kondensat zur Herstellung von Holzwerkstoffen, insbesondere formaldehydemissionsarmer Holzwerkstoffe.

15. Verwendung von Ligninsulfonat und/oder Zucker als Phasenvermittler und/oder Viskositätsregler in der reaktiven Extrusion einer Mischung umfassend ein Harnstoff-Formaldehyd-Kondensat in der Leimherstellung für die Holzwerkstoffproduktion.
